Europäisches Patentamt

European Patent Office

Office européen des brevets

(19)

(11)  **EP 0 808 768 B1**

(12)  **FASCICULE DE BREVET EUROPEEN**

(45) Date de publication et mention
de la délivrance du brevet:
**12.11.2003  Bulletin 2003/46**

(51) Int Cl.⁷: **B64C 29/00**

(21) Numéro de dépôt: **97400469.9**

(22) Date de dépôt: **28.02.1997**

(54) **Aérodyne à décollage et atterrissage verticaux**

Senkrecht startendes und landendes Flugzeug

Vertical takeoff and landing aircraft

(84) Etats contractants désignés:
**AT BE CH DE DK ES FI FR GB GR IE IT LI LU MC
NL PT SE**

(30) Priorité: **22.05.1996  US 651582**

(43) Date de publication de la demande:
**26.11.1997  Bulletin 1997/48**

(60) Demande divisionnaire:
**03000470.9 / 1 300 336**

(73) Titulaire: **Soulez-Lariviere, Jean
75008 Paris (FR)**

(72) Inventeur: **Soulez-Lariviere, Jean
75008 Paris (FR)**

(74) Mandataire: **Lemoine, Robert et al
Cabinet Malémont
42, Avenue du Président Wilson
75116 Paris (FR)**

(56) Documents cités:
**FR-A- 1 316 302        FR-A- 1 391 203
FR-A- 2 397 978        GB-A- 768 190
GB-A- 1 230 381        US-A- 3 065 929
US-A- 3 284 027        US-A- 4 828 203
US-A- 5 419 514**

## Description

Les avions ou les hélicoptères équipés d'hélices ou de rotors disposés d'une manière symétrique de part et d'autre de l'appareil et pouvant être soumis à une rotation de 90 degrés vers le haut à partir de la position horizontale de leur axe sont connus sous le nom d'aérodynes à rotors/hélices inclinables. Le positionnement vertical de l'axe des hélices ou des rotors dirige l'écoulement d'air vers le bas et la poussée vers le haut et permet à l'appareil de se propulser dans un plan vertical ou simplement de voler sur place. Le positionnement horizontal de l'axe des hélices ou des rotors dirige la poussée vers l'avant et permet le vol en palier. Dans cette dernière configuration, la sustentation est assurée par le déplacement relatif de l'air autour de surfaces de sustentation, telles que les ailes ou les empennages horizontaux. Entre les orientations exactement verticale et exactement horizontale de l'axe, tous les angles d'inclinaison sont possibles, ce qui permet diverses trajectoires de vol obliques correspondantes et des phases d'accélération/décélération appelées transitions aller et retour.

Ces aérodynes combinent l'aptitude de l'hélicoptère au vol lent et au décollage ou à l'atterrissage verticaux, et celle d'un avion classique capable de voler en palier à grande vitesse. Un avion peut atteindre une vitesse approximativement double de celle d'un hélicoptère type, c'est-à-dire supérieure à 500 km/h par rapport à une vitesse inférieure à 250 km/h pour un hélicoptère. Cependant, la complexité mécanique et structurale inhérente à un appareil à rotors inclinables caractéristique de l'art antérieur augmente le poids à vide de cet appareil comparativement à un avion de dimensions similaires, tout en augmentant également son coût de construction. En outre, le développement d'un tel appareil en termes de qualités aérodynamiques, de stabilité, de dynamique de vol et de pilotage est compliqué en raison des effets, à des vitesses faibles, de la masse d'air déplacée par les hélices dans la zone des différentes surfaces de sustentation de l'appareil. Cette masse d'air est connue sous le nom de souffle des hélices.

Il est important de prendre en considération particulièrement les trois problèmes de conception suivants.

1) Les effets du souffle des hélices sur les ailes de l'appareil.

Les hélices ou les rotors sont habituellement fixés à des moteurs montés à chacune des extrémités d'une aile qui sert de support structural. Toutefois, cette disposition pose un problème pendant la transition entre le vol vertical et le vol horizontal. Les variations de l'angle de la direction du souffle des hélices ne suivent pas directement les variations de l'angle d'inclinaison des hélices. Tant que la vitesse horizontale et la portance résultante due aux surfaces de sustentation conventionnelles ont des valeurs relativement faibles, la majeure partie de la sustentation est fournie par les hélices ou les rotors proprement dits. En raison de ce phénomène, les hélices s'inclinent vers l'avant très lentement lorsque l'appareil commence à passer en vol en palier, puis plus rapidement lorsque les ailes commencent à fournir une plus grande partie de la sustentation. Au contraire, l'angle d'inclinaison du souffle dû aux hélices varie rapidement au début puis plus lentement lorsque l'appareil passe du vol vertical au vol horizontal.

Jusqu'à maintenant, dans l'art antérieur, les deux configurations suivantes ont été utilisées pour tenter d'éviter le problème dû aux vitesses différentes auxquelles les hélices proprement dites et leur souffle résultant s'inclinent par rapport aux ailes.

a) L'aile horizontale est fixée de manière permanente à l'appareil et les hélices proprement dites pivotent vers le haut. Toutefois, cette configuration présente un inconvénient majeur. Lorsque les hélices sont dans la position verticale, leur souffle agit directement vers le bas sur l'aile et crée une force dirigée vers le bas comparable à une portance négative. Cette perte de sustentation réduit en fait la charge utile de l'appareil.

b) L'aile horizontale est fixée de manière permanente aux hélices et pivote en même temps que celles-ci. Ceci supprime le problème de la portance négative mais introduit un autre problème. Lorsque l'aile pivote vers le haut et que l'avion a encore une vitesse horizontale, la totalité de la surface de l'aile est placée directement dans la trajectoire du courant d'air. La masse d'air qui heurte brutalement cette énorme surface plane entraîne des problèmes de stabilité et de pilotage.

2) Le mécanisme d'inclinaison

Dans un hélicoptère à rotors inclinables, le mouvement de tangage est produit par une variation du pas cyclique des rotors. Dans un avion à hélices inclinables, ce mouvement de tangage est produit par une variation de la poussée d'un rotor de queue auxiliaire à axe vertical, le cas échéant. Dans tous les cas, un mouvement d'inclinaison des hélices ou des rotors dans les appareils à hélices ou rotors inclinables de l'art antérieur est obtenu à l'aide d'une servocommande montée sur l'aile ou sur le fuselage. Il va sans dire qu'une fiabilité extrême est exigée de cette servocommande. En cas de panne de ce mécanisme, l'appareil sur lequel celui-ci est installé aurait de grandes difficultés à atterrir du fait que les hélices ou les rotors resteraient en configuration de vol en palier et heurteraient le sol en raison de leur grand diamètre lorsque l'avion tenterait d'atterrir.

3) Combinaison des commandes de roulis et de lacet

Un mouvement antisymétrique, à savoir le roulis et le lacet, est généralement gouverné par des variations du pas et de l'angle d'inclinaison des hélices. Dans le cas d'aérodyne dans lequel l'ensemble de l'aile pivote en même temps que les hélices, le mouvement de roulis et de lacet est gouverné à l'aide de volets placés sur l'aile et sur lesquels agit le souffle des hélices. Toutefois, l'effet de ces gouvernes de pilotage varie en fonction de l'angle d'inclinaison des hélices ou de l'aile, selon qu'elles sont complètement à l'horizontale, complètement à la verticale, ou quelque part entre les deux positions. Pendant un vol vertical, les variations du pas des hélices influent sur le taux de roulis de l'aérodyne, tandis que pendant un vol en palier, les variations du pas influent sur le taux de lacet de l'appareil. De même, l'inclinaison des hélices ou du volet d'aile entraîne des variations du lacet pendant un vol vertical, mais des variations du roulis pendant un palier. La combinaison de ces commandes pour permettre à un pilote de les appréhender et de les manipuler facilement est très compliquée, et des commandes de vol numériques gérées par ordinateur sont par conséquent nécessaires.

Ces trois problèmes de conception ont été résolus dans les aérodynes à rotors inclinables de l'art antérieur à l'aide de systèmes très complexes. Le coût élevé de cette complexité limite l'utilisation des appareils de ce type à des tâches très spécifiques. En outre, le coût élevé de ce niveau de complexité rend impossible l'application de la technologie des rotors inclinables aux petits appareils du type utilisé dans l'aviation générale, qui constituent la majeure partie du marché.

La présente invention se propose d'introduire de nouvelles solutions pour remédier à ces trois problèmes de conception.

Les antériorités suivantes sont connues du demandeur et sont mentionnées ici à titre de référence :

brevet américain N° 1 981 700 au nom de Hoffman,
brevet américain N° 3 289 980 au nom de Hill,
brevet américain N° 3 358 946 au nom de Shye,
brevet américain N° 3 409 248 au nom de Bryan,
brevet américain N° 3 488 018 au nom de Johnson,
brevet américain N° 4 541 593 au nom de Cabrol,
brevet américain N° 4 641 800 au nom de Rutan,
brevet américain N° 4 881 701 au nom de Bullard,
brevet américain N° 5 320 306 au nom de Gennaro,
brevet américain N° 5 419 514 au nom de Ducan.

La présente invention se distingue des brevets mentionnés ci-dessus en référence, pris séparément ou en combinaison, en ce sens qu'elle envisage une configuration particulière de l'aile, de l'empennage horizontal et des dispositifs de montage des hélices, ainsi que des techniques de pilotage et un mode de mise en oeuvre de celles-ci qui ne sont enseignés ou suggérés nulle part dans l'art antérieur.

La présente invention concerne un aérodyne à décollage et atterrissage verticaux, comprenant un fuselage comportant une extrémité avant et une extrémité arrière ; une aile montée sur l'extrémité arrière ; un empennage canard horizontal monté sur l'extrémité avant ; deux bras opposés portés latéralement par le fuselage, entre l'aile et l'empennage ; chaque bras comportant une extrémité libre distante du fuselage, sur laquelle est montée une nacelle d'hélice portant une hélice possédant un axe de rotation et entraînée par des moyens moteurs par l'intermédiaire d'arbres de transmission, les hélices possédant chacune un moyeu d'hélice et des pales ; chaque pale d'une hélice étant reliée de manière tourillonnante au moyeu correspondant pour que son pas puisse varier, chaque hélice possédant en outre des moyens pour faire varier le pas de ses pales de façon collective et de façon cyclique suivant l'azimut longitudinal et l'azimut latéral autour de l'axe de rotation de ladite hélice ; l'aérodyne comportant en outre des moyens de commande de tangage, de roulis et de lacet à la disposition du pilote, chaque nacelle d'hélice étant montée sur l'extrémité libre du bras correspondant par un pivot d'inclinaison et étant apte à s'incliner entre une première position dans laquelle l'axe de rotation de son hélice est sensiblement horizontal, et une seconde position dans laquelle cet axe est sensiblement vertical.

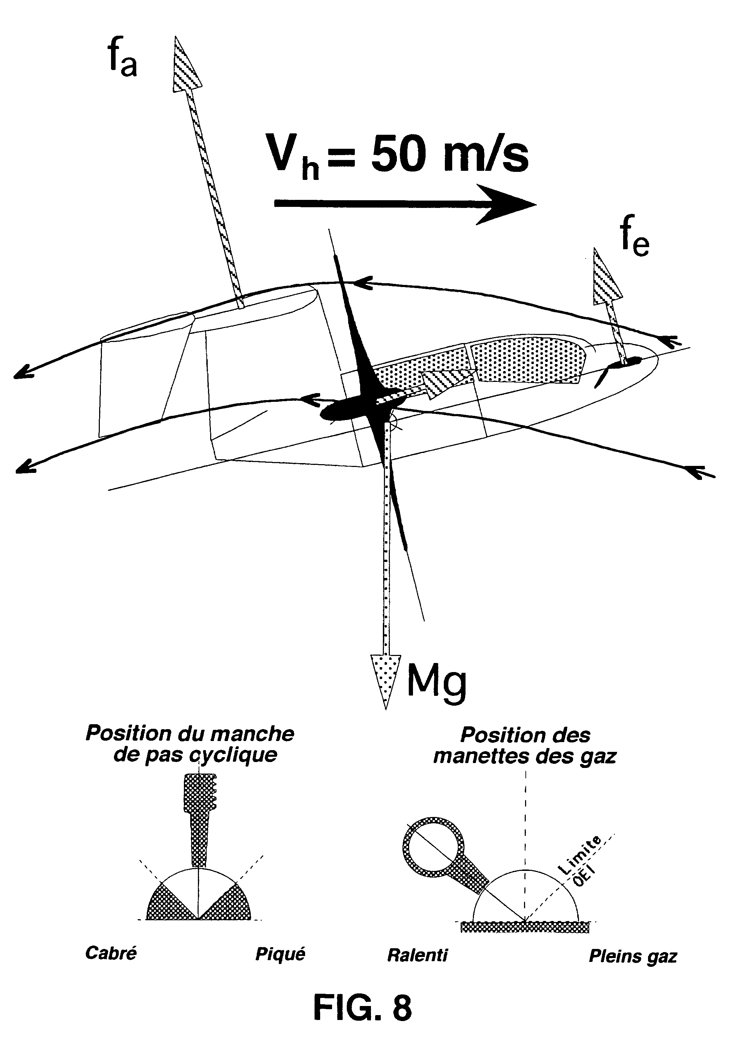

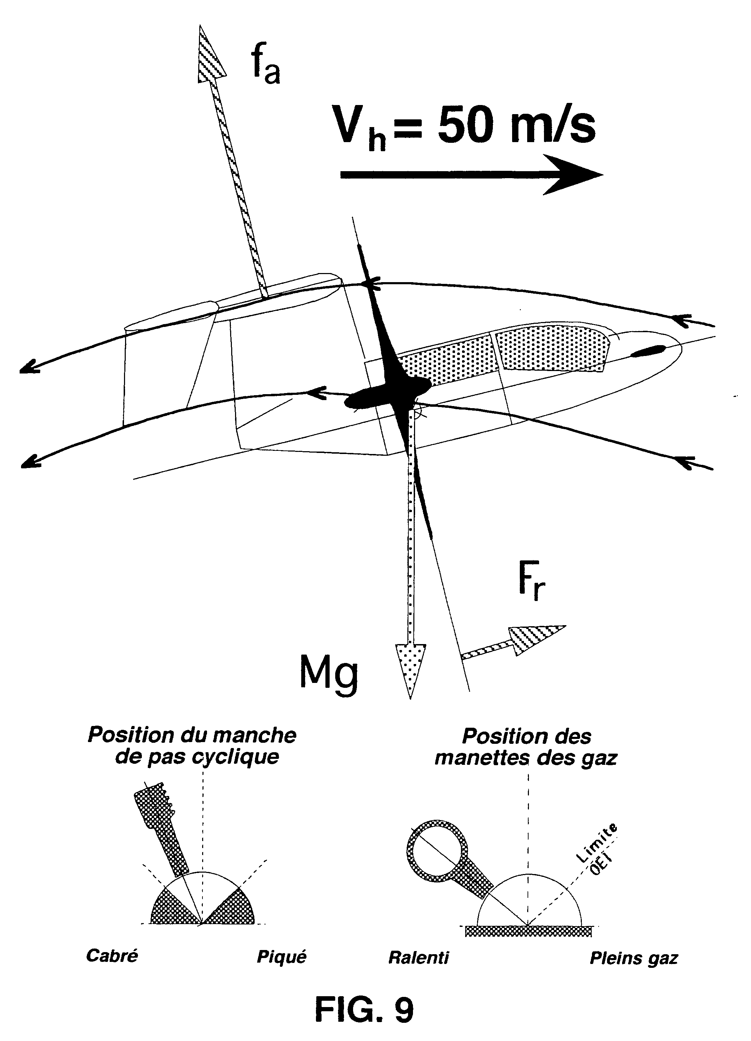

US-A-4 828 203 décrit un aérodyne de ce type qui est représenté sur les figures 8 et 9 et dont les nacelles pivotent entre leurs positions verticale (figure 8) et horizontale (figure 9) sous la commande d'engrenages appropriées reliés aux moteurs (colonne 13, lignes 10 à 15).

La présence des ces engrenages a toutefois l'inconvénient de compliquer la structure de l'aérodyne et d'augmenter les coûts de production.

La présente invention remédie à cet inconvénient en proposant un aérodyne du type décrit dans US-A-4 828 203, qui est caractérisé en ce que les nacelles peuvent s'incliner d'elles-mêmes autour de leurs pivots d'inclinaison sous l'action du moment appliqué résultant de variations du pas cyclique des pales des hélices, leur inclinaison étant contrôlée par des moyens de freinage appropriés.

L'aérodyne selon la présente invention comporte en outre les dispositions définies dans les revendications 2 à 17 jointes en annexe.

Les buts, aspects et caractéristiques de l'aérodyne selon l'invention sont les suivantes :

1) La première caractéristique de conception importante concerne le positionnement des hélices, de l'aile et de l'empennage horizontal de l'appareil. Ces trois éléments sont divisés en trois ensembles distincts.

a) Chacune des hélices est fixée à un bras court et fixe. Le bras est positionné à mi-hauteur du fuselage et légèrement en arrière du centre de gravité de l'appareil. Sa fonction est uniquement structurale. Sa section transversale est par conséquent la plus faible possible pour lui permettre de remplir sa fonction structurale qui est de servir de support de montage pour les hélices.

b) L'aile de l'appareil est fixe et non inclinable. Elle a une configuration du "type parasol" et est fixée au fuselage au moyen de mâts obliques simples ou doubles. Sur chacune de ses extrémités, l'aile comporte une dérive inversée. L'aile est positionnée à l'arrière de l'appareil, derrière l'axe des hélices afin d'échapper complètement au souffle de ces dernières.

c) L'empennage horizontal est situé à l'avant de l'avion, sous la forme d'empennages canards. Cette situation compense la position arrière extrême de l'aile et aide à ramener le foyer vers une position proche de celle des petits bras porteurs d'hélices. Chaque empennage canard comporte un seul volet que le pilote peut utiliser pour faire varier le moment aérodynamique de l'appareil.

Cette disposition a pour but d'éliminer le problème du souffle des hélices décrit en introduction parmi les difficultés de conception. L'aile reste fixe et est soustraite au souffle des hélices. Cette configuration supprime le problème de portance négative rencontré pendant le vol vertical, ainsi que la création d'angles d'attaque importants pendant les transitions entre modes de vol. Le seul inconvénient que l'on ait constaté dans cette configuration est la traînée supplémentaire engendrée par les bras. Cependant, étant donné que l'aile proprement dite est dépourvue de volets et d'autres parties saillantes, elle ne génère en fait pas de surplus de traînée et compense par conséquent la traînée minimale créée par les bras.

2) Une seconde caractéristique de conception importante concerne les hélices proprement dites. Il est possible de faire varier le pas général (collectif) des pales des hélices, qui sont fixées à un moyeu central, comme c'est le cas pour la plupart des appareils à hélices. Cela signifie que l'on peut apporter collectivement aux pas des trois pales (au moins) le même degré de variation, ce qui a pour effet de faire varier la poussée de l'hélice. En outre, il est également possible de faire varier le pas cyclique de chaque pale, tant sur l'axe longitudinal que sur l'axe latéral de l'hélice, comme c'est le cas pour la plupart des hélicoptères. Cette variation du pas cyclique signifie qu'il est possible de faire varier le pas de chacune des trois pales (au moins) suivant une fonction sinus ou cosinus de l'azimut de la pale. Une fonction sinus, avec la référence de 0 degré prise par rapport à la direction arrière lorsque l'axe de l'hélice est vertical, augmente le pas sur la moitié extérieure et diminue le pas sur la moitié intérieure du disque de l'hélice, et sera appelée ci-après une variation du pas cyclique latéral. Une fonction cosinus, avec la même référence, augmente le pas sur la moitié arrière et diminue celui-ci sur la moitié avant du disque de l'hélice, et sera appelée ci-après une variation du pas cyclique longitudinal. A la différence d'un hélicoptère normal, toutefois, les pales n'ont pas de liberté en battement vertical. Elles ne sont pas articulées ; elles sont fixées au moyeu d'une manière rigide et rotative. Du fait de cette rigidité, la variation du pas cyclique ne produit pas une inclinaison de l'hélice et de sa poussée par rapport au moyeu, comme dans les rotors d'hélicoptère articulés, mais, au contraire, engendre un moment aérodynamique appliqué à ce moyeu par les pales (ou un déplacement radial équivalent de la poussée résultante).

3) La troisième caractéristique de conception importante concerne l'inclinaison des hélices. L'inclinaison des hélices n'est commandée par aucun type de servocommande. Les hélices peuvent s'incliner librement, en fonction d'un moment appliqué résultant de variations du pas cyclique des pales des hélices. Ce phénomène sera expliqué plus en détail ci-après.

La liberté d'inclinaison vers le haut et vers le bas des hélices sans intervention d'un quelconque dispositif d'actionnement mécanique est toutefois limitée par un assemblage qui remplit les quatre fonctions suivantes.

a) Une fonction de liaison : une tige de liaison reliée à chacune des hélices tourne lorsque les hélices s'inclinent et fait en sorte que l'angle d'inclinaison des hélices soit le même ; la tige de liaison transmet le mouvement d'inclinaison à un organe central qui garantit que le degré d'inclinaison des hélices reste dans les limites de la course circulaire de 90 degrés. De plus, chaque tige de liaison possède une élasticité suffisante pour autoriser aux hélices une différence d'angle d'inclinaison de 2 ou 3 degrés entre elles ou par rapport à l'organe central.

b) Une fonction de contrôle de la vitesse d'inclinaison : la vitesse d'inclinaison des hélices est limitée par un système d'amortissement hydraulique qui fait partie de l'organe central.

c) Une fonction destinée à faire en sorte que les hélices restent à l'intérieur de la plage d'inclinaison de 0 à 90 degrés.

i) L'organe central comporte un mécanisme de blocage pour faire en sorte que l'inclinaison des hélices n'excède pas 90 degrés, c'est-à-dire pour empêcher leur inclinaison vers l'arrière une fois que leur axe est orienté verticalement. Le système de blocage consiste simplement en une butée contre laquelle l'organe central vient en appui une fois que les hélices sont dans la position verticale.

ii) Lorsque l'axe des hélices est dans la position horizontale, à 0 degré, un mécanisme de verrouillage commandé par le pilote sert à bloquer chaque nacelle d'hélice sur son bras, pour ainsi empêcher les hélices de s'incliner.

d) Une fonction de freinage de l'inclinaison des rotors : l'organe central comprend un système d'amortissement hydraulique qui comporte un dispositif supplémentaire permettant au pilote de supprimer la liberté d'inclinaison des hélices et de maintenir, pendant une certaine période de temps, l'angle d'inclinaison des hélices à une valeur intermédiaire entre les positions à 0 degré et 90 degrés. A titre de variante, le système de freinage peut être supprimé si le pilote n'a pas l'intention de piloter l'appareil à basse vitesse (20 à 30 m/s) pendant des périodes de temps prolongées, ce qui nécessiterait de maintenir les hélices à un angle d'inclinaison autre que 0 ou 90 degrés.

Les buts, aspects et avantages de la présente invention seront mieux compris à la lecture de la description détaillée suivante du mode de réalisation préféré donnée à titre d'exemple nullement limitatif en référence aux dessins annexés dans lesquels :

les figures 1 à 12 représentent successivement les différents modes de fonctionnement de l'appareil de la présente invention depuis une position de stationnement sur un tarmac, à un décollage vertical, une transition en vol horizontal, un vol horizontal, une transition entre un vol horizontal et une descente verticale, une descente verticale et un atterrissage ;
la figure 13 représente une combinaison des figures 1 à 6 en une seule séquence ;
la figure 14 représente une combinaison des figures 7 à 12 en une seule séquence ;
la figure 15 représente les forces résultant de variations du pas cyclique latéral pendant un vol stationnaire, les axes des hélices étant en position verticale ;
la figure 16 représente les forces résultant de variations du pas cyclique latéral pendant un vol de translation, les axes des hélices étant en position horizontale ;
la figure 17 est une vue en perspective de l'appareil de l'invention
la figure 18 est une vue postérieure de la nacelle d'hélice gauche, comportant des parties arrachées pour mieux montrer les détails ;
la figure 19 est une vue frontale de la nacelle d'hélice gauche et de l'organe central, comportant des parties arrachées pour mieux montrer les détails ; et
la figure 20 est une représentation schématique de la disposition générale des commandes de vol de l'appareil de l'invention.

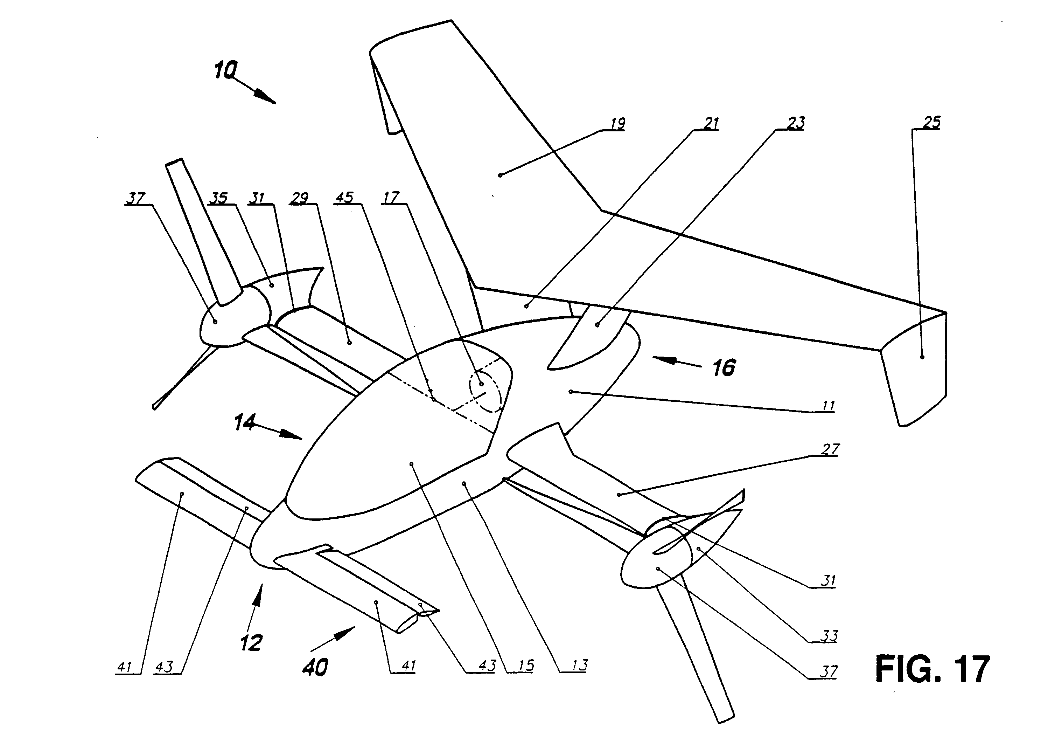

En référence tout d'abord à la figure 17, l'avion de l'invention est désigné d'une manière générale par le numéro de référence 10 et comprend un fuselage 11 comportant une partie de cockpit 13 munie d'une verrière 15 qui peut être ouverte d'une manière bien connue de l'homme de l'art pour permettre d'accéder au cockpit 14. Le fuselage 11 possède une extrémité avant 12 et une extrémité arrière 16.

A l'arrière du cockpit 14, sont situés des moyens moteurs comprenant un ou plusieurs moteurs. L'un des moteurs est représenté schématiquement et désigné par le numéro de référence 17. A l'arrière de l'appareil 10, une aile unique 19 est montée sur le fuselage 11 à l'aide de mâts fixes 21 et 23. Comme cela est visible sur la figure 17, l'aile 19 a une configuration dans l'ensemble en forme de V et comprend des dérives verticales 25 qui pendent vers le bas depuis ses extrémités de l'aile 19.

Chaque côté du fuselage 11 comporte, monté sur lui, un bras de support, les bras de support étant respectivement désignés par les numéros de référence 27 et 29. Chaque bras possède une extrémité distale par rapport au fuselage 11, comprenant un pivot 31 auquel est reliée de manière pivotante une nacelle d'hélice, la nacelle gauche étant désignée par le numéro de référence 33, et la nacelle droite par le numéro de référence 35. Chacune des nacelles 33, 35 porte une hélice rotative 37 qui peut être entraînée en rotation par les moteurs 17 d'une manière qui sera décrite plus en détail ci-après.

A l'extrémité avant du fuselage 11, il est prévu un empennage horizontal 40 qui comprend deux empennages canards parallèles 41 dirigés de manière opposée dont chacun porte un volet pivotant unique 43 qui peut être actionné par le pilote d'une manière bien connue de l'homme de l'art.

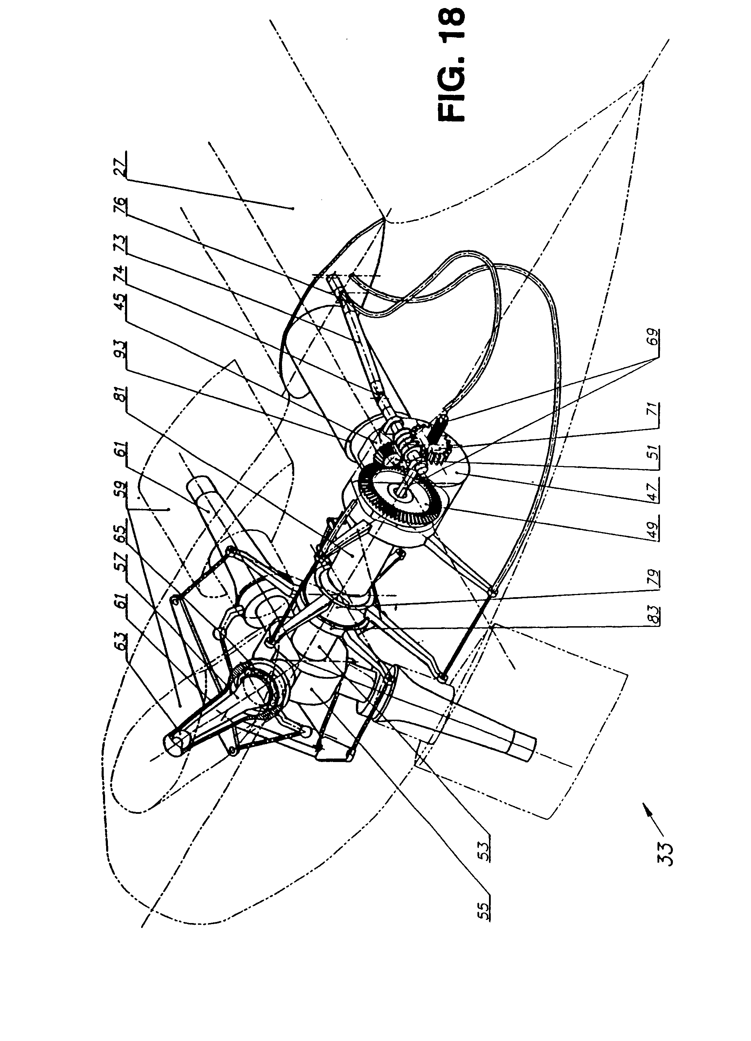

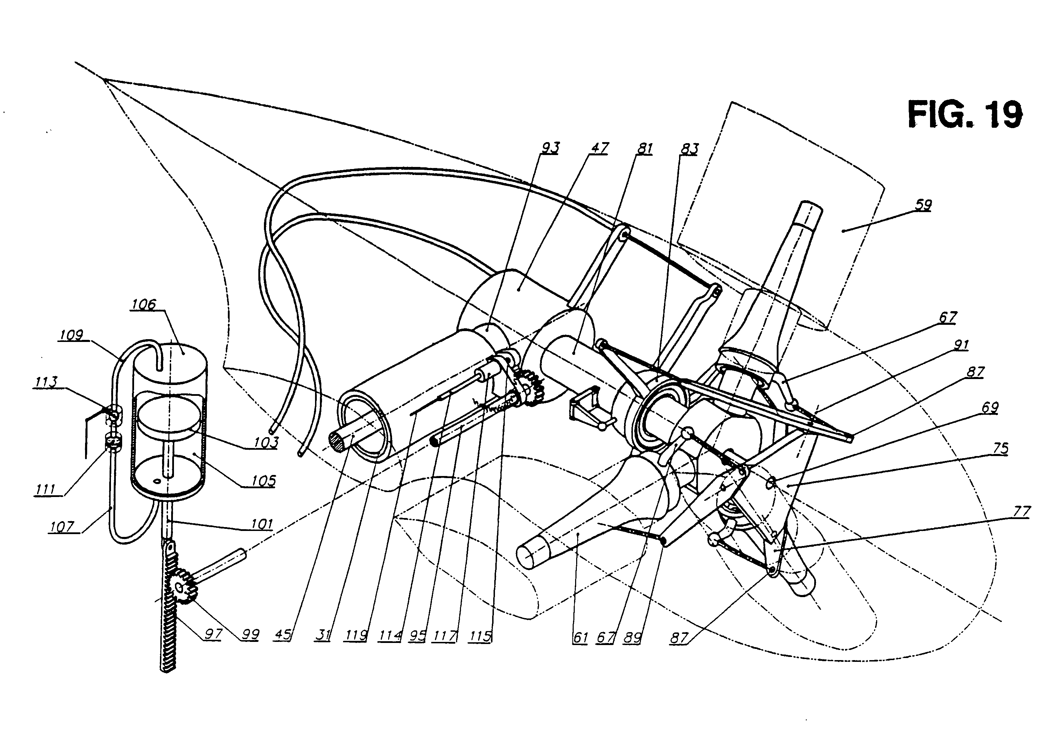

Comme cela a été expliqué précédemment, les figures 18 et 19 sont respectivement des vues postérieure et frontale de la nacelle d'hélice gauche 33. En référence aux figures 18 et 19, chaque nacelle d'hélice comprend les organes décrits ci-dessous.

Des moyens de transmission comprennent une boîte de transmission 47 contenant deux pignons coniques 49 et 51 qui coopèrent pour renvoyer à angle droit le mouvement de rotation d'un arbre d'entraînement 45 relié à l'un des moteurs 17, afin que les hélices 37 puissent être entraînées en rotation de manière appropriée. L'arbre d'hélice 53 est creux et relié à un moyeu d'hélice 55 qui, dans le mode de réalisation représenté, comprend trois bras rigides 57 dont chacun supporte mobile en rotation une pale d'hélice 59. L'appareil de l'invention comprend des moyens de variation de pas.

En référence plus particulièrement à la figure 18, chaque pale possède en son pied un insert 61 relié au bras correspondant 57 par deux paliers dont l'un est désigné par le numéro de référence 63 et consiste en un palier lisse, tandis que l'autre est désigné par le numéro de référence 65 et consiste en un palier sur roulement à contact oblique et à chemin de roulement profond. Ce palier 65 absorbe des forces centrifuges et les deux paliers absorbent des forces et des mouvements résultant de la portance et de la traînée aérodynamiques tout en permettant à chaque pale de tourner de manière contrôlée autour du bras 57 sur lequel elle est montée pour permettre une variation du pas.

En référence à la figure 19, un levier 67 traverse l'axe de chaque pale d'hélice et est fixé à la base de celle-ci pour en commander le pas. En référence aux figures 18 et 19, l'organe de commande de pas collectif se compose d'une tige interne 69 qui s'étend à travers l'arbre d'hélice creux 53 et déborde aux deux extrémités de celui-ci. A l'extrémité arrière de l'arbre d'hélice creux, la tige 69 est actionnée axialement par un mécanisme double 71 formé d'un ensemble à vis et écrou, lui-même actionné par une tige 73 rigide en torsion articulée à la cardan en 74 et 76, qui agit de manière identique sur les hélices 37 gauche et droite pour maintenir le pas de celles-ci synchronisé. A l'extrémité avant de l'arbre d'hélice creux 53, la tige interne 69 comporte, fixé à elle, un organe en forme d'étoile 75 dont chaque branche est fixée à un levier de commande de variation de pas 77.

L'organe de commande de pas cyclique se compose d'un plateau oscillant 79 accouplé avec la partie avant de la boîte de transmission 81. Les inclinaisons longitudinale et latérale du plateau 79 sont commandées par le pilote. L'organe de commande de pas cyclique comprend, en plus, un autre plateau 83 qui tourne avec l'hélice et comprend autant de bras qu'il y a de pales d'hélice 59.

Sur chaque pale, le levier de commande de variation de pas 77 réalise la somme des variations de pas cyclique et collectif ordonnées par le pilote. A l'une de ses extrémités 87, le levier est fixé au levier de pas de pale 67 à l'aide d'une biellette. A son autre extrémité désignée par le numéro de référence 89, le levier de commande de pas 77 est relié au plateau rotatif 83 également à l'aide d'une biellette.

En un point proche de son point médian, désigné par le numéro de référence 91, le levier de commande de pas 77 est relié à l'organe en forme d'étoile 75 de la commande de pas collectif. Ce dispositif formé de l'organe en étoile 75, du plateau oscillant 79, du levier de commande de pas 77 et des biellettes constitue les moyens de variation de pas collectif et cyclique décrits précédemment.

Lorsque le plateau 79 est dans sa position neutre, son plateau rotatif 83 est perpendiculaire à l'axe de l'hélice et ne transmet aucun mouvement axial à l'extrémité 89 du levier de commande de pas 77, de sorte que cette extrémité 89 reste immobile. L'organe en forme d'étoile 75 déplace axialement le point médian 91 du levier de commande de pas 77 et, par conséquent, l'extrémité 87 de celui-ci ainsi que le levier de pas de pale 67 qui y est fixé, d'une distance égale pour chaque pale, afin de réaliser la variation du pas dit collectif.

Pour n'importe quelle position de cet organe en étoile 75, et pour n'importe quelle valeur du pas de pale collectif, si le pilote incline le plateau oscillant 79 par rapport à sa position neutre, le plateau rotatif 83 se déplace parallèlement. Les extrémités des bras du plateau 83 doivent alors suivre, axialement, une fonction sinus ou cosinus de leur azimut. Le mouvement axial de chaque extrémité de bras est transmis à l'extrémité 89 du levier de commande de pas 77 par la biellette et, de là, à l'extrémité 87 du même levier 77 dont le point médian 91 conserve la même position donnée que l'organe en forme d'étoile 75, et finalement au levier de pas de pale 67. Le choix par le pilote de la phase et de l'amplitude de l'inclinaison du plateau oscillant 79 lui permet de communiquer aux hélices la variation de pas cyclique latéral et longitudinal décrite ci-dessus.

Conformément aux enseignements de la présente invention, les hélices 37 s'inclinent autour d'un pivot 93 sans faire appel à un système de commande mécanique, mais à un assemblage passif. Cet assemblage comprend une tige de torsion 95 qui forme une liaison élastique. Cette tige de torsion 95 transmet l'angle d'inclinaison des hélices 37 à un organe central par l'intermédiaire d'un mécanisme à crémaillère et pignon, crémaillère qui est désignée par le numéro de référence 97, tandis que le pignon est désigné par le numéro de référence 99. L'élasticité en torsion de la tige 95 permet un différentiel d'inclinaison d'environ 2 à 3 degrés des hélices respectivement l'une par rapport à l'autre. Comme cela est mieux visible sur la figure 19, la crémaillère 97 est reliée à une tige 101 qui possède, reliés à elle, des moyens amortisseurs comprenant un piston amortisseur 103 qui effectue un mouvement de va-et-vient à l'intérieur d'un cylindre hydraulique 105 dont les extrémités sont reliées entre elles par l'intermédiaire de passages ou de conduits 107 et 109 qui communiquent par un gicleur calibré 111. Le diamètre du gicleur est suffisamment étroit pour ne permettre qu'un faible écoulement entre les deux extrémités du cylindre et, par conséquent, une vitesse d'inclinaison lente des hélices. Un robinet 113 est prévu dans le passage 107 et peut être commandé par le pilote d'une manière bien connue de l'homme de l'art pour former un système de freinage qui, lorsque le robinet est fermé, empêche un déplacement de la crémaillère 97 et, par conséquent, du pignon 99. Un mécanisme de blocage est prévu pour empêcher une inclinaison des hélices au-delà de la position à 90 degrés, mécanisme de blocage qui consiste en une simple butée de fin de course formée par la paroi supérieure 106 du cylindre amortisseur, qui limite la distance de déplacement maximal du piston 103 à l'intérieur du cylindre 105.

Un mécanisme de verrouillage est formé d'un doigt 114 qui vient se loger dans un trou 115 s'étendant à travers le centre du pivot 93. Le doigt 114 peut être ressorti et déverrouillé par un électroaimant 117, un câble 119 étant prévu en secours, en cas de panne de l'électroaimant 117.

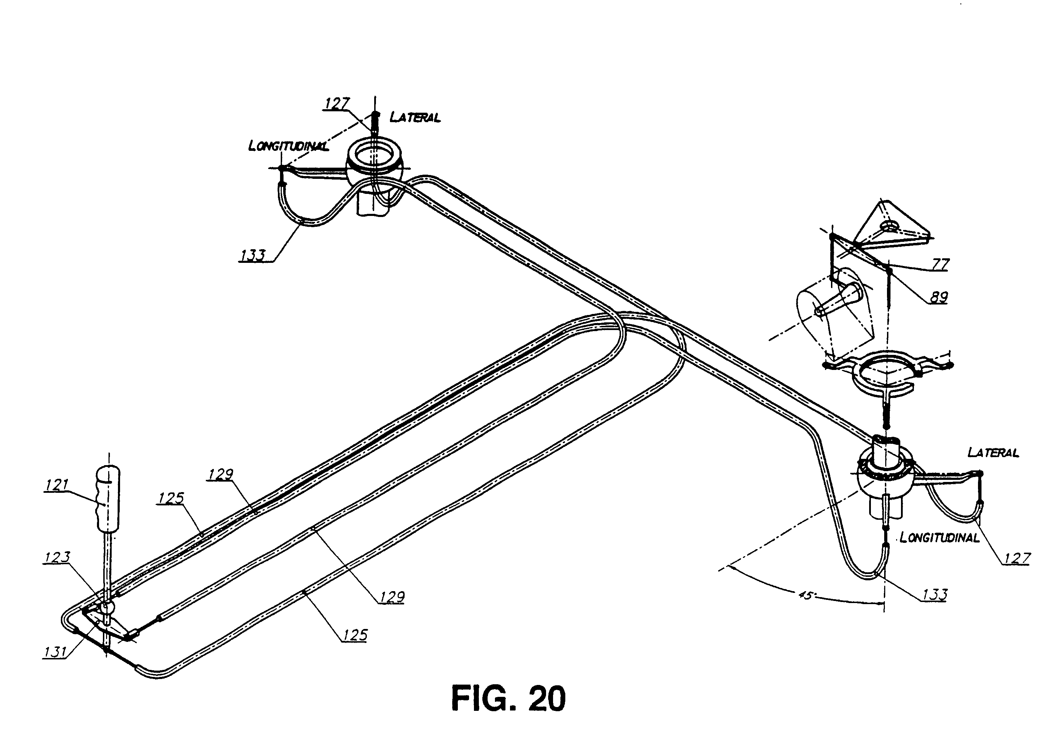

En référence à la figure 20, des moyens de commande pour commander le fonctionnement de l'appareil comprennent le manche de commande 121 du pilote, relié à une articulation 123 du type à rotule, qui permet une inclinaison Avant-Arrière, Droite-Gauche du manche et une rotation de celui-ci sur lui-même. Le manche de commande 121 est relié directement aux mécanismes de commande cyclique situés dans les nacelles des hélices par quatre transmissions souples à billes sous gaine. Deux de ces transmissions, désignées par le numéro de référence 125, sont reliées sous les panneaux de plancher du cockpit à la partie inférieure du manche 121 et sont actionnées par les mouvements d'inclinaison Droite-Gauche de ce dernier. Les extrémités 127 des transmissions 125, situées dans les nacelles des hélices, agissent sur les plateaux de commande de pas cyclique latéral en compensant par construction le déphasage de l'extrémité 89 du levier de commande de pas cyclique 77 par rapport à l'azimut réel des pales, soit environ 45° sur la figure 20. Les deux autres transmissions sont désignées par le numéro de référence 129 et sont reliées sous les panneaux de plancher du cockpit à un petit levier transversal 131 qui est lui-même relié au manche 121 et se déplace lors d'un mouvement d'inclinaison Avant-Arrière du manche ou d'une rotation de celui-ci. Les extrémités 133 des transmissions 129, situées dans les nacelles des hélices agissent sur les plateaux de commande de pas cyclique longitudinal, conformément à la description précédente.

Comme cela sera expliqué plus en détail ci-après, ces connexions de commande simples suffisent à assurer toutes les manoeuvres en vol nécessaires pour piloter l'avion 10 de l'invention. Le mouvement d'inclinaison Droite-Gauche du manche 121 commande des variations antisymétriques des plateaux de commande de pas latéral, pour ainsi créer un moment de roulis qui entraîne l'appareil en roulis. Un mouvement d'inclinaison Avant-Arrière du manche commande des variations symétriques des plateaux de commande de pas longitudinal pour ainsi créer le moment de tangage qui permet à l'appareil de voler avec le nez vers le haut et vers le bas, c'est-à-dire en cabré et en piqué. Le même mouvement du manche de commande 121 permet également de modifier l'angle d'inclinaison des hélices, à condition que le robinet de frein 113 ait été ouvert, comme cela a été expliqué. Une rotation du manche de commande 121 commande, par l'intermédiaire du levier transversal 131, des variations antisymétriques de la commande de pas longitudinal qui, du fait de l'élasticité de la tige de torsion 95, modifie à son tour l'angle d'inclinaison des hélices et la direction de leur souffle. Ceci crée le moment de lacet nécessaire pendant un vol à basse vitesse et pendant les transitions entre les modes de vol. Un mouvement de rotation du manche de commande 121 remplace le palonnier que l'on trouve dans un avion traditionnel. Si on le souhaite, toutefois, un palonnier peut être installé et sera, par conséquent, relié au levier transversal 131 d'une manière bien connue de l'homme de l'art. Cependant, la configuration décrite ici permet au pilote de piloter l'appareil 10 d'une seule main, au lieu d'utiliser l'une de ses mains et ses deux pieds. Il est possible de déterminer des degrés variables de sensibilité de réponse aux entrées de commande en sélectionnant soigneusement les longueurs des bras de levier aux extrémités des mécanismes de transmission 125 et 129.

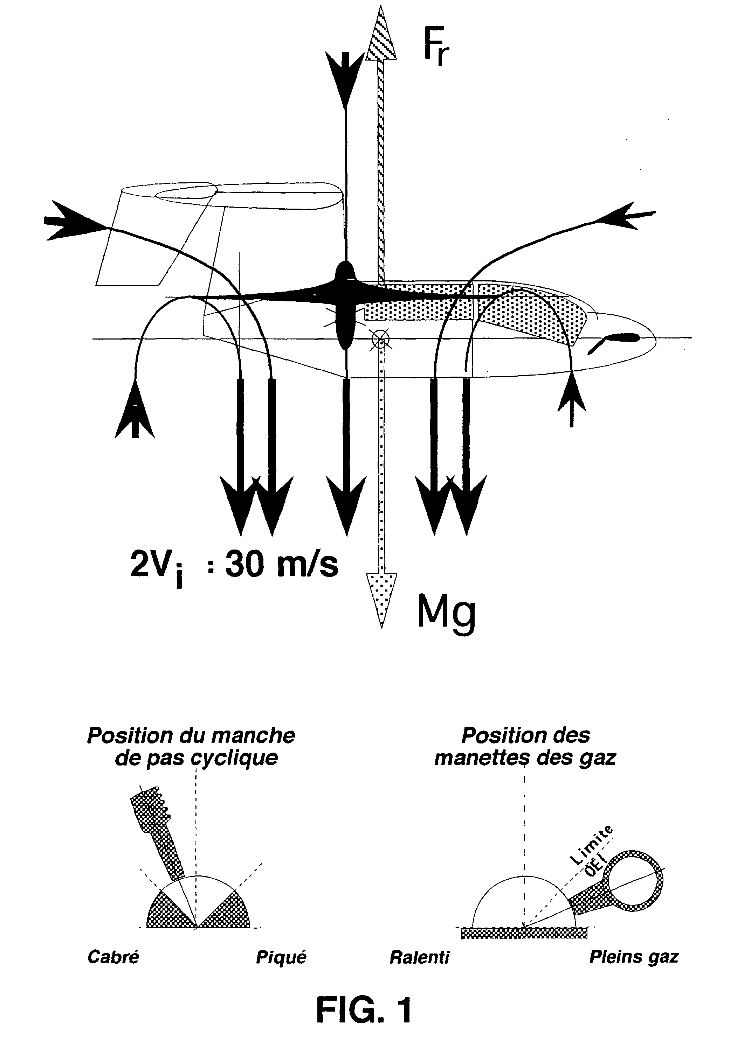

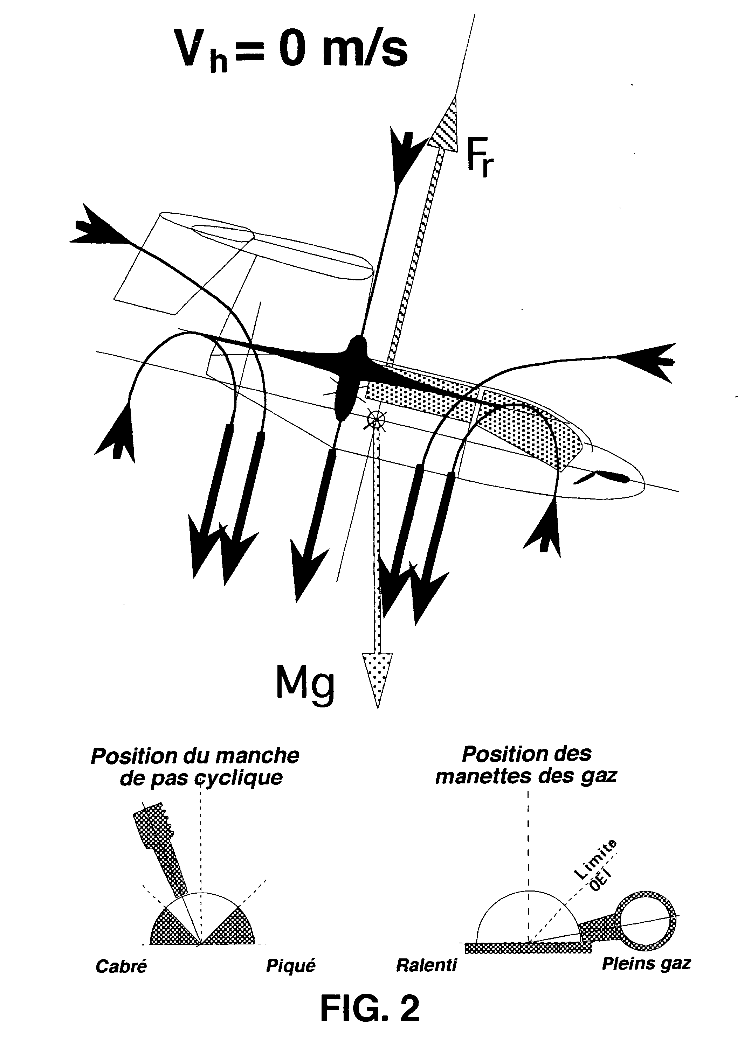

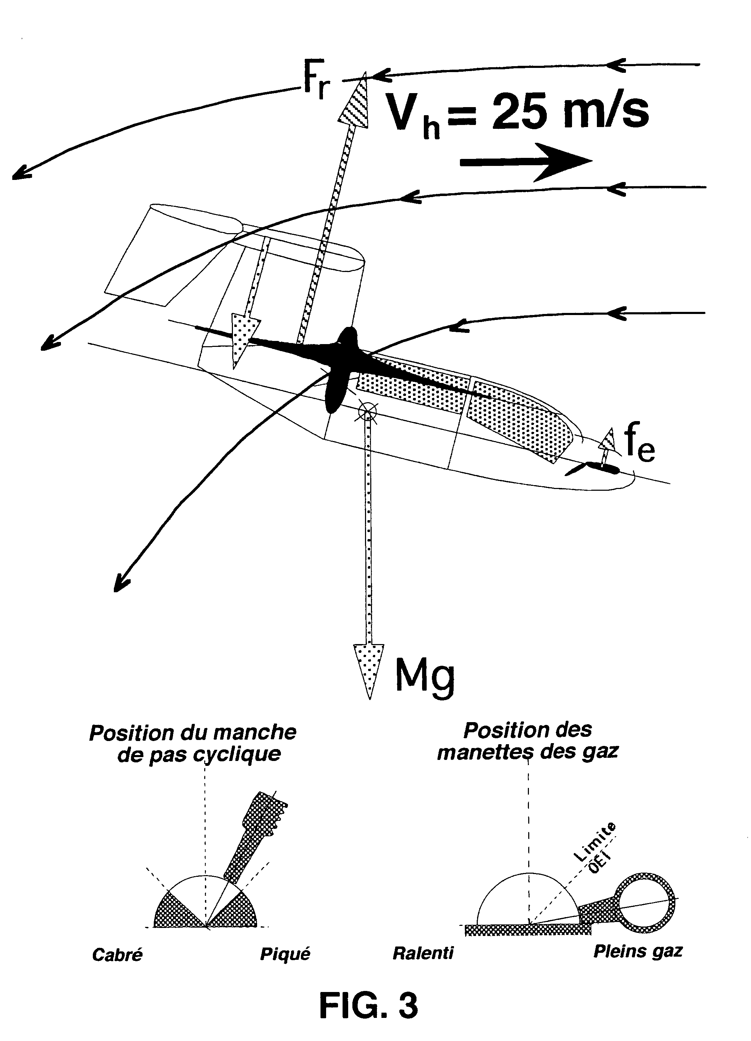

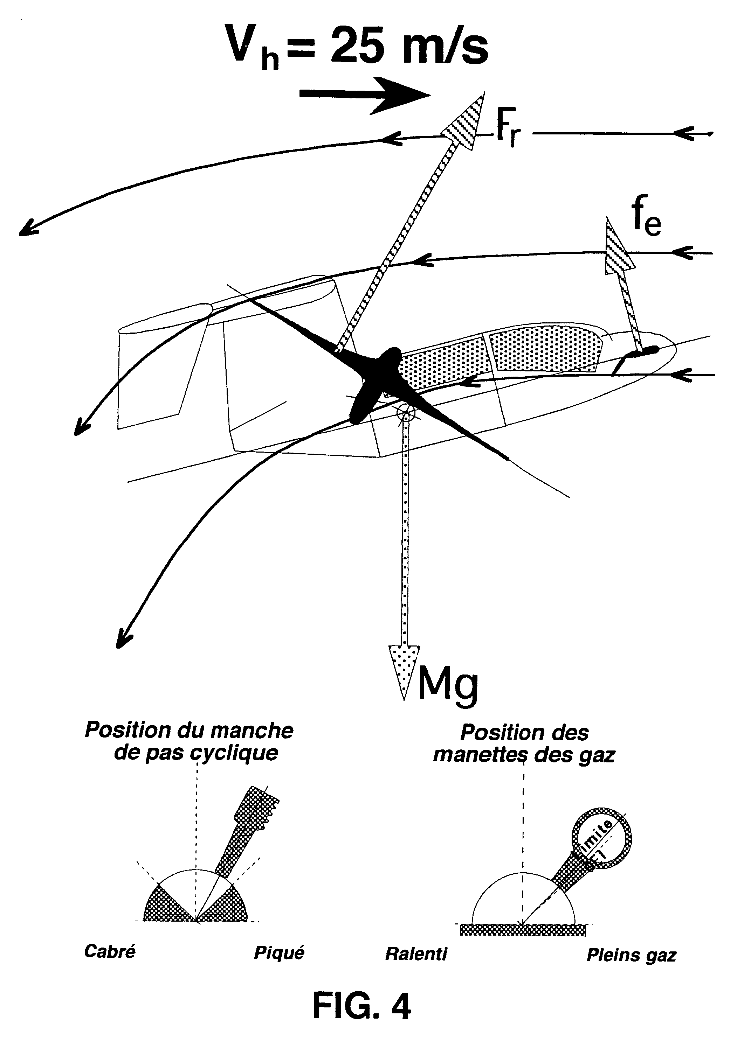

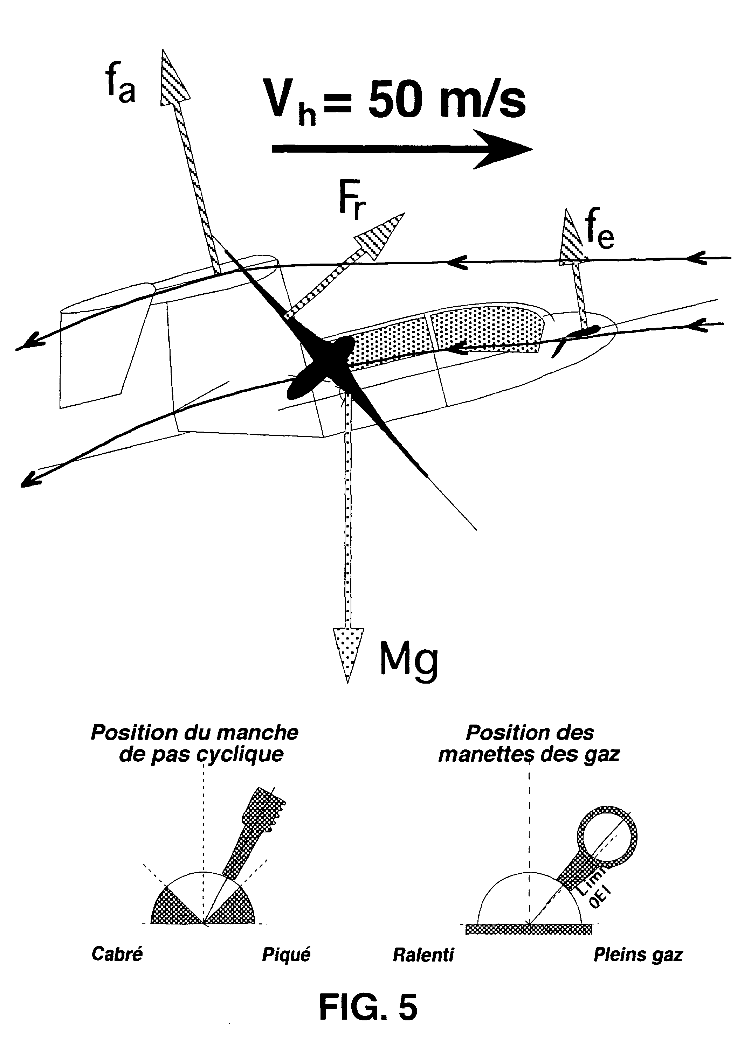

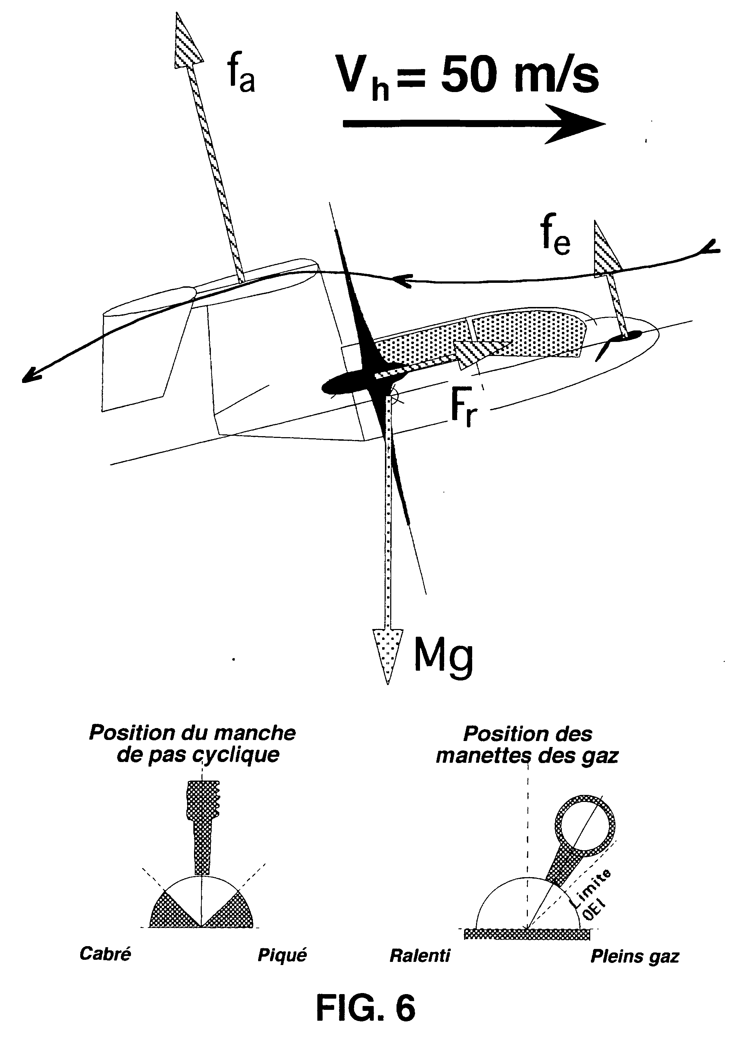

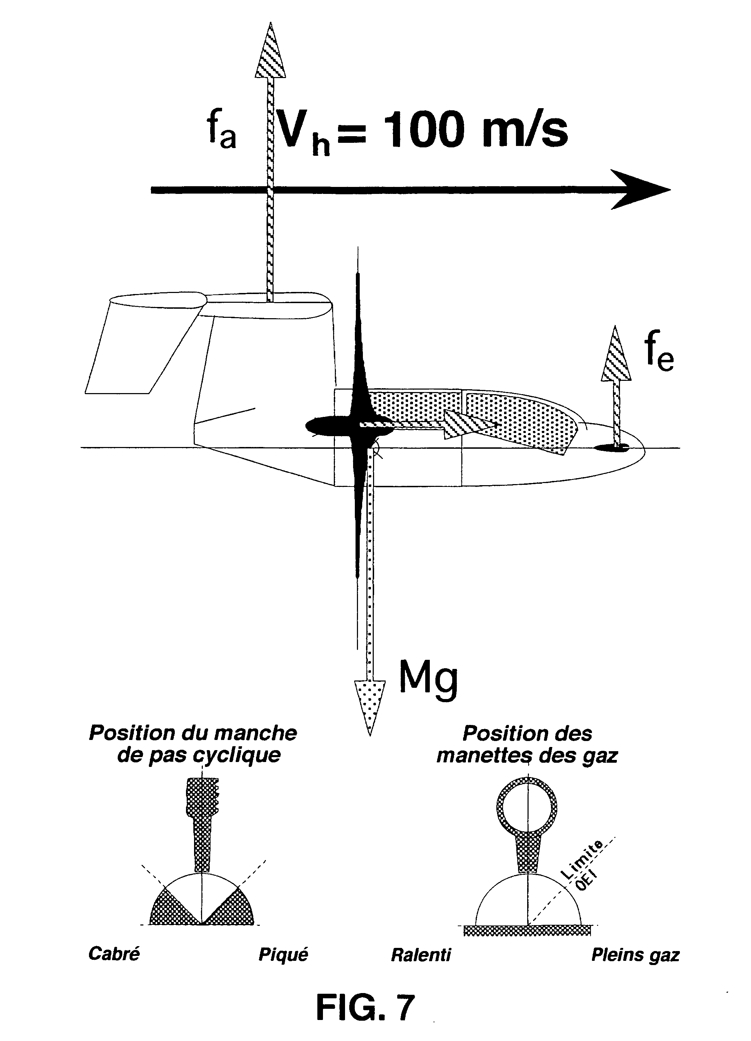

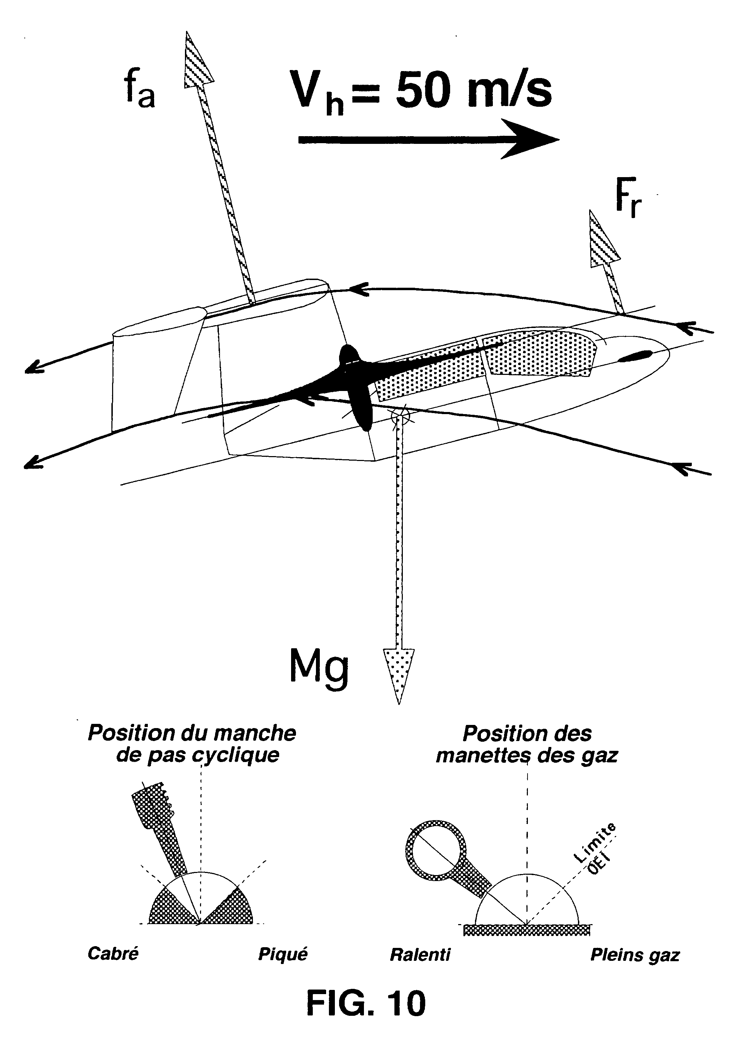

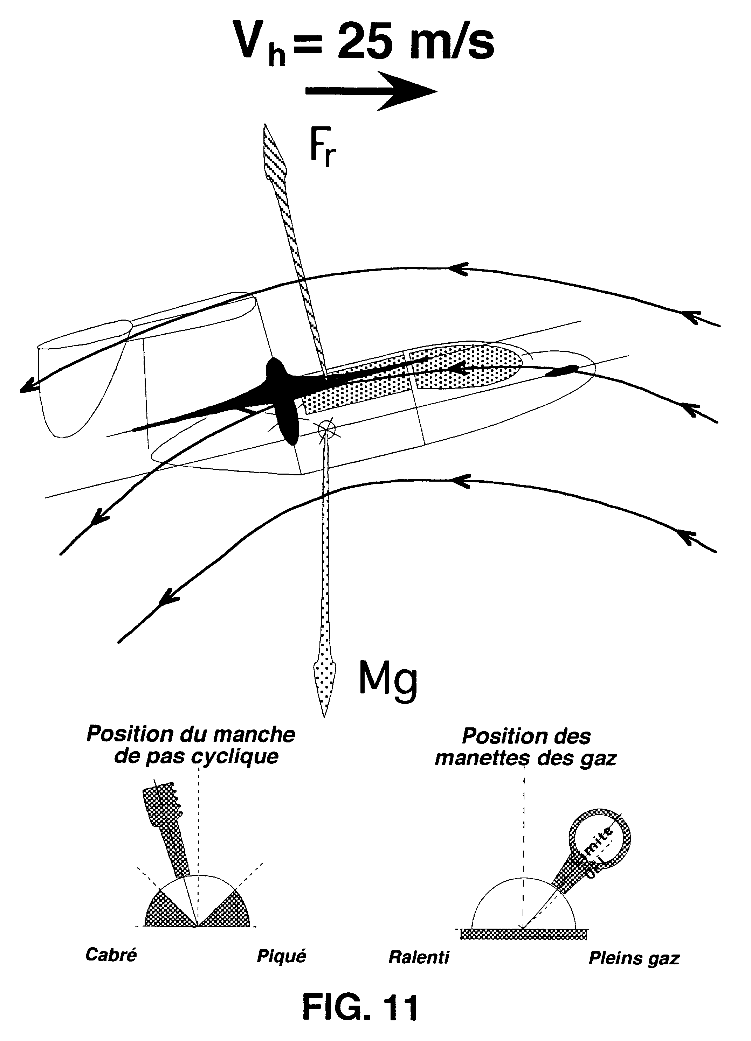

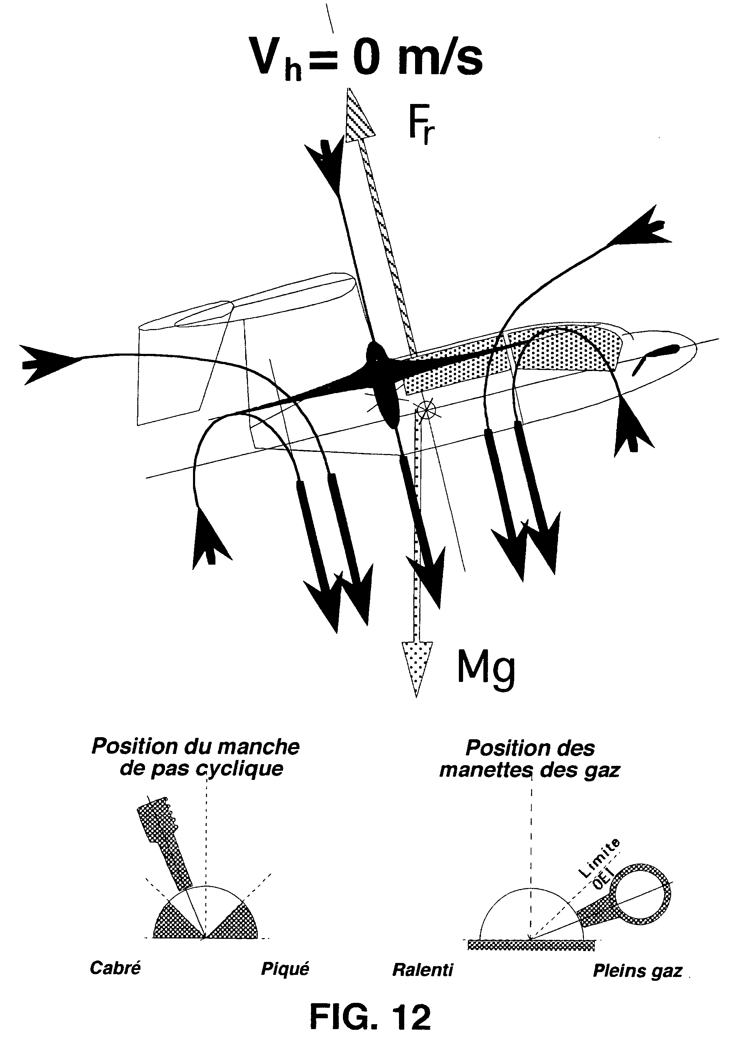

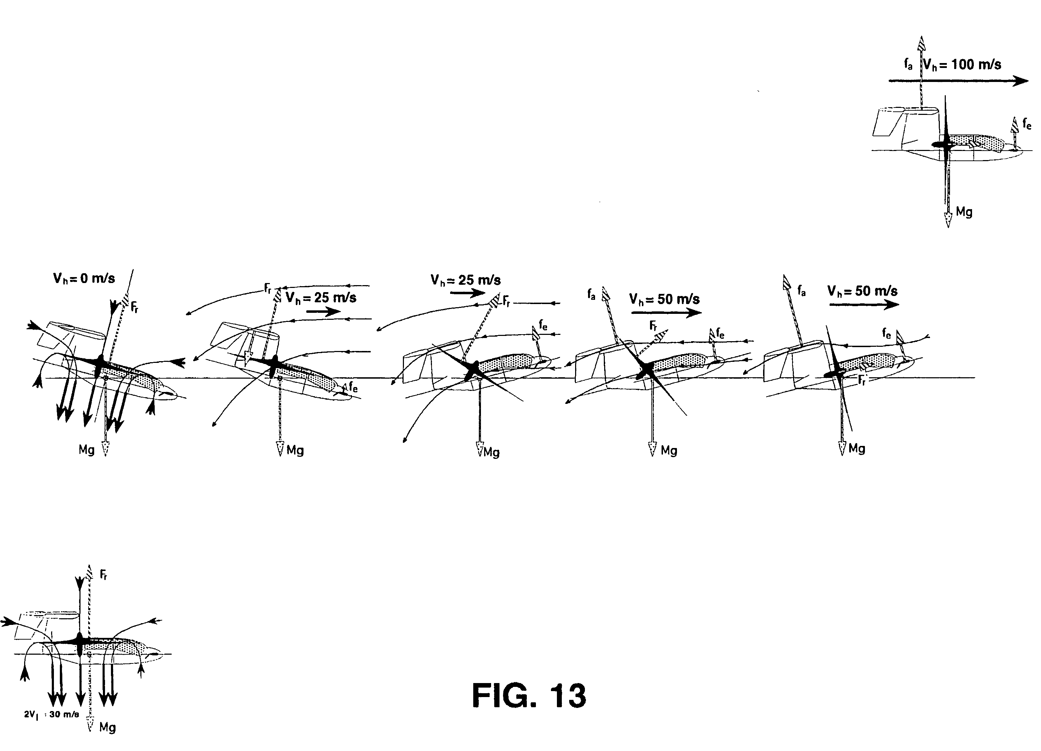

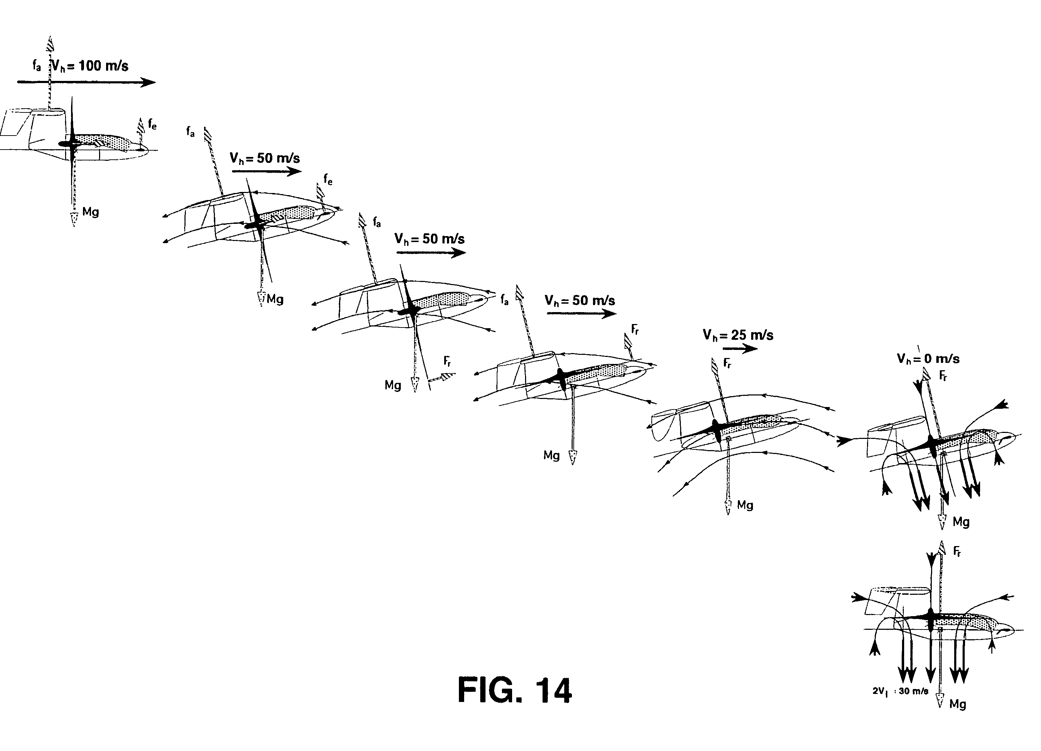

En gardant à l'esprit la description ci-dessus de la présente invention, donnée en référence aux figures 17 à 20, le lecteur est maintenant invité à se référer aux figures 1 à 16 afin de comprendre tous les modes de fonctionnement de l'avion 10 de l'invention.

Les descriptions suivantes du pilotage en tangage et des manoeuvres de transition ainsi que du pilotage en roulis et en lacet vont permettre au lecteur de comprendre de quelle manière les trois caractéristiques de conception importantes décrites précédemment dans la partie consacrée au résumé de l'invention, sont utilisées pour résoudre les difficultés associées aux trois points à prendre en considération pour la conception, et qui ont été évoqués en introduction.

Un premier aspect concerne le pilotage de l'aérodyne suivant des degrés de liberté symétriques, notamment en ce qui concerne le tangage de l'appareil et l'inclinaison des hélices.

En ce qui concerne la puissance des moteurs et le pas des hélices, une action symétrique influencera la vitesse à laquelle les hélices tournent ainsi que la poussée des hélices 17. Cette vitesse des hélices est supposée régulée et traitée conformément à des principes connus, ce qui permet au pilote de concentrer son attention sur le tangage de l'appareil et l'inclinaison des hélices. Par exemple, dans un avion caractéristique, les deux hélices synchronisées sont équipées d'un dispositif permettant des variations identiques de leur pas, variations qui sont effectuées par un mécanisme d'actionnement de commande de pas. Le pilote dispose de commandes lui permettant de choisir un réglage de régime des hélices pour chaque phase individuelle de vol, par exemple, "régime de décollage" ou "régime de croisière". Une fois qu'un réglage a été choisi, il est conservé pendant toute la durée de la phase de vol ; aucune entrée du pilote n'est nécessaire pour les modifications minimes qui doivent être apportées en continu aux réglages de régime pendant le vol. Un régulateur interne apporte des modifications minimes continues au pas des hélices, afin de faire en sorte que celles-ci fonctionnent à la vitesse de rotation appropriée pour maintenir la phase de vol choisie.

De plus, le pilote commande le réglage de puissance des moteurs 17 à l'aide de manettes des gaz qu'il actionne de la main gauche. Les manettes des gaz sont jumelées afin que des variations de puissance identiques soient apportées à chaque moteur, lorsque tous les moteurs 17 fonctionnent correctement. En cas de panne d'un moteur, le pilote peut compenser la perte de puissance du moteur défaillant en augmentant la puissance du ou des moteur(s) restant(s). Cette procédure d'urgence peut être automatisée au moyen de méthodes actuellement disponibles, afin de libérer la main gauche du pilote d'une occupation permanente par les manettes de gaz.

Sur la base des méthodes de pilotage existantes qui ont été rappelées ci-dessus, les techniques de pilotage en tangage et inclinaison des hélices conformément aux enseignements de la présente invention sont les suivantes.

Gouverne de tangage de l'appareil

Le tangage de l'appareil est gouverné par des variations symétriques de la composante longitudinale du pas cyclique des hélices. Ces variations de pas provoquent un moment de tangage qui est appliqué aux hélices par des forces aérodynamiques extérieures. Ce moment est transmis des hélices au fuselage 11 par l'intermédiaire de l'organe central en passant par le système d'amortissement, le mécanisme de blocage, le mécanisme de verrouillage, et le système de freinage. Ces structures sont décrites ci-dessus en référence aux figures 17 à 20.

Lorsque le moment passe par le système d'amortissement, son amplitude est réduite d'un moment aérodynamique dû à la vitesse d'inclinaison des hélices. Toutefois, la vitesse d'inclinaison des hélices (1/4 tour en 20 secondes) est suffisamment faible comparativement à la vitesse de rotation des hélices (10 à 20 tours par seconde) pour que le moment dû à la vitesse d'inclinaison des hélices soit négligeable.

Cette méthode de gouverne par le pas cyclique est presque identique à celle utilisée par les hélicoptères conventionnels. Elle supprime la nécessité de prévoir un rotor de queue auxiliaire de contrôle de tangage ou deux paires de rotors principaux en tandem.

D'autre part, cette méthode de gouverne de tangage par le pas cyclique n'est pas affectée par la vitesse horizontal de l'appareil ou par l'angle d'inclinaison des hélices. Cette technique est par conséquent extrêmement efficace et peut être utilisée dans toutes les phases de vol, que l'appareil soit en phase de décollage, en phase d'atterrissage, en phase de vol de croisière en palier, ou en phase de transition entre des modes de vol vertical et horizontal.

Inclinaison des hélices

Les paragraphes suivants décrivent le déroulement de la transition de l'appareil du vol vertical au vol horizontal, ou transition aller, puis de la transition retour. Le déroulement est décrit étape par étape, chaque étape étant illustrée par une figure portant un numéro correspondant.

Etape 1. L'appareil a décollé verticalement et est en vol immobile ou stationnaire au-dessus du terrain d'aviation. Le pilote a passé en revue toutes les consignes de la liste de vérification et a sélectionné les réglages de régime et de puissance appropriés. Il s'est assuré, comme cela est indiqué sur sa liste de vérification, que les volets 43 prévus sur les empennages canards 41 étaient complètement sortis.

Pendant que l'appareil est en vol immobile, l'écoulement d'air aspiré vers le bas par les hélices a une vitesse très faible lorsqu'il passe au-dessus de l'aile 19 et des empennages canards 41. Les forces aérodynamiques résultant de l'écoulement de l'air au-dessus de l'aile 19 et des empennages canards 41 sont négligeables, moyennant quoi il n'y a pas de portance négative. A ce moment-là, l'appareil est gouverné uniquement par les hélices dont la poussée Fr assure également toute la portance.

Par conception, le centre de gravité de l'appareil est situé en avant des axes autour desquels les hélices pivotent et en avant des ailettes 27 et 29. Cette position en avant du centre de gravité est nécessaire pour assurer à l'appareil une stabilité de tangage à basse vitesse. Le poids de l'appareil appliqué au niveau du centre de gravité par rapport à l'axe de pivotement des hélices crée un moment qui se traduit par un piqué du nez de l'appareil. Ce moment doit être équilibré par un moment cabreur créé, par le pas cyclique des hélices. Pour tenir compte de ce moment, le pilote doit placer la commande de pas cyclique dans une position située en arrière de la position neutre, et choisir un réglage de puissance élevé afin de maintenir un vol immobile stable et en palier. Le moment créé par les hélices et le moment créé par le positionnement en avant du centre de gravité se neutralisent à travers le mécanisme de blocage et le système de freinage

Etape 2. Le pilote décide de partir en transition du vol vertical au vol horizontal et commence cette transition en augmentant légèrement la puissance du moteur et en faisant piquer le nez de l'appareil. Par exemple, s'il décide de réaliser cette manoeuvre avec une accélération de 2,5 m/s/s (0,25 g), la poussée requise Fr est donnée par $\sqrt{(1^2 + 0,25^2)} = 1,03$, ce qui correspond à 3 % de poussée de plus que le poids de l'appareil.

De plus, l'angle de piqué nécessaire pour la manoeuvre est donné par $\tan^{-1}(0,25) = 14$ degrés. Par conséquent, à ce stade de la transition, l'avion doit avoir une valeur de poussée égale à 103 % de son poids et un angle de piqué de 14 degrés.

A cet instant, l'écoulement d'air généré par les hélices suit le même schéma, par rapport à l'avion, qu'au cours de l'Etape 1. Cela signifie que le souffle des hélices est incliné vers le bas et vers l'arrière en formant un angle d'environ 14 degrés avec une ligne imaginaire passant par le centre de gravité. Après environ 5 secondes dans cette configuration, l'appareil atteint une vitesse horizontale de 12,5 m/s. 10 secondes après avoir commencé la transition du vol vertical en vol horizontal, l'avion a atteint une vitesse horizontale de 25 m/s.

Etape 3. A ces vitesses horizontales basses, l'écoulement d'air autour de l'aile est dévié vers le bas par les hélices, ce qui l'oblige à passer par dessus l'aile 19. Ceci crée sur l'aile une force de portance négative $(-f_a)$, laquelle génère à son tour un moment cabreur qui agit sur l'avion. Dans la zone des empennages canards 41, l'écoulement d'air reste peu perturbé par les hélices. Etant donné que les volets 43 situés sur les empennages canards 41 sont complètement sortis, les empennages canards 41 fournissent une portance positive $(f_e)$ qui crée un second moment cabreur agissant sur l'appareil.

Le moment créé par la portance négative de l'aile et le moment créé par la portance positive des empennages canards 41 dont les volets 43 sont sortis s'additionnent pour engendrer un moment cabreur plus important dont l'amplitude croît au fur et à mesure que la vitesse vers l'avant de l'appareil augmente. Ce moment commence par compenser le moment piqueur dû au positionnement en avant du centre de gravité de l'appareil. Puis, ces deux moments opposés s'annulent mutuellement, après quoi, lorsque la vitesse horizontale continue à augmenter, le moment cabreur surpasse le moment piqueur.

En conséquence, lorsque l'appareil prend de la vitesse, le pilote doit progressivement déplacer la commande cyclique vers l'avant par rapport à sa position située en arrière de la position neutre des Etapes 1 et 2 afin de contrebalancer la tendance du nez de l'appareil à se cabrer. Ceci fait que le vecteur de poussée Fr agit sur un point situé derrière le centre des hélices. A ce moment-là, la butée unidirectionnelle du mécanisme de blocage n'est plus active, la fermeture du robinet de frein 113 étant seule responsable de ce que les axes des hélices restent dans la position verticale (90 degrés).

Etape 4. Pour que les hélices s'inclinent vers l'avant, il faut que le robinet de frein 113 soit ouvert. Lorsqu'il est ouvert, les hélices commencent à pivoter d'elles-mêmes vers l'avant. Dans une variante de l'appareil conçu sans le mécanisme de freinage commandé par le pilote, les hélices commencent à s'incliner vers l'avant dès que le levier de commande cyclique est déplacé vers l'avant au-delà de la position neutre.

Pendant le mouvement d'inclinaison vers l'avant des hélices, les moments dus aux variations du pas cyclique sont transmis à l'appareil, avec une faible réduction comme cela a été expliqué précédemment, par l'intermédiaire du système amortisseur. Le calibre du gicleur 111 a été choisi pour être suffisamment étroit afin de limiter la vitesse d'inclinaison des hélices à des valeurs très faibles (1/4 tour en 20 secondes = 4,5 degrés/s) de sorte que les moments de pilotage appliqués par le pilote grâce à des ajustements du pas cyclique ne varient pas de manière appréciable.

Au cours de cette étape de transition, le pilote n'a qu'à maintenir l'accélération de l'appareil à la valeur souhaitée et la pente de la trajectoire le long de la trajectoire souhaitée. Toutes les corrections nécessaires sont effectuées à l'aide du levier de commande de pas cyclique. Par exemple, si l'appareil monte plus qu'il n'est souhaité, il suffit, pour corriger l'écart de trajectoire, de déplacer le levier de commande de pas cyclique vers l'avant pour abaisser le nez de l'appareil.

En ce qui concerne l'inclinaison des hélices, en fait, au cours des phases initiales de la transition du vol vertical en vol horizontal, ce ne sont pas les hélices proprement dites qui pivotent vers le bas, mais au contraire le reste de l'appareil qui pivote vers le haut. C'est-à-dire que ce ne sont pas les hélices qui se déplacent par rapport au sol, mais l'appareil lui-même. L'appareil pivote de l'attitude initiale piquée qu'il avait au cours de l'Etape 2, dans une attitude de vol en palier, puis dans une attitude cabrée. Ce redressement du fuselage 11 diminue, puis fait disparaître, la portance négative due à l'aile principale 19, et son moment cabreur résultant. La perte du moment cabreur est compensée par une augmentation de la portance $(f_e)$ due aux empennages canards 41 dont les volets 43 sont toujours sortis.

A ce moment-là, tandis que la vitesse horizontale de l'appareil n'est que de 10 à 20 m/s, l'essentiel de la portance de celui-ci est encore assurée directement par la poussée Fr des hélices. Toutefois, lorsque la vitesse horizontale augmente et que l'appareil commence à se cabrer, une partie croissante de la portance commence à être assurée par l'aile 19 et les empennages canards 41.

Jusqu'alors, la puissance était maximale, c'est-à-dire réglée sur pleins gaz. Une fois que la vitesse horizontale de l'appareil a atteint 25 m/s, la puissance requise pour permettre à l'appareil de maintenir sa position sans accélération est inférieure à la puissance maximale fournie par un seul moteur. Le pilote peut alors actionner les manettes des gaz pour ramener les moteurs 17 à un réglage de puissance inférieur.

Etape 5. Environ dix secondes plus tard, l'appareil atteint une vitesse horizontale de 50 m/s. A cette vitesse, l'aile et l'empennage horizontal 40 fournissent une portance $(f_a + f_e)$ suffisante pour équilibrer le poids Mg de l'appareil. S'il ne l'a déjà fait, le pilote peut relâcher la pression du frein pour permettre aux hélices d'adopter leur position totalement horizontale.

Etape 6. La transition aller est terminée. Les hélices sont dans leur position totalement horizontale et sont verrouillées dans cette position à l'aide du mécanisme de verrouillage commandé par le pilote. L'appareil accélère pour atteindre sa vitesse de montée de 70 m/s, puis sa vitesse de croisière de 100 à 125 m/s (la vitesse de croisière réelle étant fonction de l'altitude de l'appareil). Celui-ci est alors en tous points semblable à un avion. Son angle d'attaque et son assiette sont réduits afin d'assurer sa sustentation à toutes les vitesses et à toutes les altitudes. Les volets 43 des empennages canards sont utilisés par le pilote pour équilibrer l'appareil, de sorte que la commande cyclique peut être laissée à proximité de la position neutre sans nécessiter un effort permanent du pilote.

L'inclinaison des hélices et le régime de puissance des moteurs 17 sont choisis en fonction des configurations nécessaires pour la montée, puis pour la croisière.

Etape 7. L'appareil est en configuration de croisière complète ; les volets 43 des empennages canards ont été rentrés et la commande de pas cyclique est proche de la position neutre. La poussée Fr agit le long de l'axe central de chaque hélice.

L'appareil vole en palier à une vitesse qui se situe entre 100 et 125 m/s. Le pilote amorce la descente de l'appareil. La vitesse de l'appareil est ralentie à 50 m/s lorsque le pilote tire les manettes des gaz en arrière pour diminuer la puissance. L'angle d'attaque de l'aile augmente et le pilote compense en sortant les volets 43 des empennages canards afin d'équilibrer la portance de l'aile et de maintenir la commande cyclique à proximité de la position neutre.

Lorsque l'appareil atteint une vitesse horizontale de 50 m/s, le pilote stabilise la descente à raison de - 3 m/s et avec une pente de 6 %.

Etape 8. La configuration de l'appareil à ce stade de la transition retour est semblable à la configuration qu'il avait pendant l'Etape 6. Cependant, la puissance des moteurs est réduite, puisque l'appareil est en descente et non en montée ou en accélération.

Avant de commencer la transition réelle du vol horizontal au vol vertical, le régime des hélices est réglé à la valeur appropriée. Ce réglage est semblable au réglage du décollage, les deux réglages étant supérieurs au réglage de croisière.

Etape 9. La véritable transition retour du vol horizontal au vol vertical commence lorsque le pilote rentre les volets 43 des empennages canards. Comme les volets 43 ont été rentrés, le moment dû à la portance de l'aile doit alors être équilibré par un moment cabreur dû aux hélices. Lorsque le pilote rentre les volets 43, il doit également tirer sur le manche de commande cyclique pour maintenir l'assiette de l'appareil. A ce moment-là, la poussée Fr des hélices s'exerce parallèlement à leur axe central et est appliquée au niveau d'un point bas du disque des hélices.

Etape 10. Les verrous qui assujettissent les hélices aux ailettes sont déverrouillés et le robinet 113 est ouvert. Les hélices pivotent lentement vers le haut sous l'effet du moment cabreur dû au pas cyclique des hélices. Tous les moments aérodynamiques sont transmis des hélices au fuselage 11 par l'intermédiaire du système amortisseur.

Au bout de 10 à 20 secondes, les hélices sont passées de la position dans laquelle leur axe est complètement horizontal (0 degré) à la position dans laquelle leur axe est complètement vertical (90 degrés). Le mouvement de pivotement des hélices s'arrête lorsqu'elles viennent buter contre le mécanisme de blocage. Une fois que les hélices ont atteint la position à 90 degrés, tous les moments aérodynamiques sont transmis des hélices au fuselage 11 par l'intermédiaire du mécanisme de blocage.

Pendant que les hélices s'inclinent vers l'arrière, la poussée Fr qu'elles fournissent est faible, et l'essentiel de la portance est assurée par l'empennage horizontal 40 et l'aile principale ($f_e + f_a$).

Etape 11. Le pilote poursuit la transition du vol horizontal au vol vertical en continuant à décélérer l'appareil. La puissance des moteurs est augmentée, ce qui se traduit par une augmentation du pas et de la poussée Fr. L'appareil est maintenu dans une attitude légèrement cabrée afin que la poussée comporte une composante dirigée vers l'arrière et contribue à freiner l'appareil.

A ce stade, le souffle des hélices crée un schéma d'écoulement d'air qui diminue l'angle d'attaque ou d'incidence de l'aile et réduit la part de la portance fa, qui est assurée par l'aile. Au fur et à mesure que l'appareil ralentit pour atteindre une vitesse horizontale de 25 m/s, la majeure partie de la portance est transférée de l'aile aux hélices. La portance assurée par l'empennage horizontal 40 dont les volets 43 sont rentrés, est négligeable.

Le pilote décide de mettre fin à la transition retour en se préparant à poser l'appareil, dès que l'aire d'atterrissage est en vue. La puissance des moteurs est augmentée une nouvelle fois, et le nez de l'appareil est cabré encore davantage. Le souffle des hélices agit de la même manière qu'au cours de l'Etape 3, ce qui se traduit par la création d'une portance négative due à l'aile. Toutefois, l'attitude cabrée de l'appareil ainsi que sa trajectoire descendante font que la portance négative est beaucoup moins importante que celle créée au cours de l'Etape 3. En outre, la configuration de vol de l'appareil garantit également que les hélices resteront appuyées contre leur butée verticale et ne pivoteront pas vers le bas. Le levier de commande de pas cyclique est maintenu tiré en arrière pour faire en sorte que les hélices restent en appui contre la butée verticale.

Etape 12. A des vitesses extrêmement basses, l'écoulement d'air créé par les hélices devient semblable à celui des Etapes 1 et 2. Pour achever la transition retour, le pilote règle la puissance afin de maintenir l'appareil à l'altitude souhaitée tandis qu'il positionne celui-ci au-dessus de l'aire d'atterrissage. Puis, il pose l'appareil comme il le ferait avec un hélicoptère conventionnel.

Le pilotage de l'appareil suivant des degrés de liberté antisymétriques, c'est-à-dire en ce qui concerne le roulis et le lacet de l'appareil, peut être expliqué de la manière suivante.

Lorsque l'appareil est en vol immobile ou se déplace à des vitesses extrêmement faibles, la gouverne de roulis est fournie par des variations antisymétriques du pas cyclique latéral, sans changement du pas général des hélices. C'est le pilote qui commande ces variations en déplaçant le levier de commande de pas cyclique à gauche ou à droite. Le réglage du pas général des hélices doit rester égal pour chacune des hélices. Les variations cycliques entraînent des différences de portance sur chaque moitié droite et gauche des disques des hélices. Ces différences de portance provoquent des moments induisant un roulis qui se transmettent au fuselage 11 par l'intermédiaire des moyeux des hélices et des ailettes. Ces moments induisant un roulis sont extrêmement efficaces et peuvent être générés par des variations du pas cyclique de 2 ou 3 degrés seulement. En outre, la pression exercée par le pilote sur le levier de commande pour effectuer les variations de pas est minimale et ne nécessite donc aucun système d'assistance mécanique. Un tel système serait nécessaire si les variations concernaient les pas collectifs des hélices.

La gouverne de lacet est fournie par des variations antisymétriques du pas cyclique longitudinal. L'utilisation de variations symétriques du pas cyclique longitudinal comme méthode de gouverne de tangage de l'appareil a déjà été décrite. Dans le cas de la gouverne de lacet, les moments de tangage opposés dus aux variations du pas cyclique de chaque hélice s'annulent mutuellement. Cependant, en raison de l'élasticité de la tige de liaison, chaque hélice peut avoir une inclinaison décalée de 2 ou 3 degrés par rapport à l'autre (de manière antisymétrique). Du fait des différences d'angles d'inclinaison et des différences résultantes des composantes de la force de portance de chaque hélice vers l'avant et vers l'arrière, un moment de lacet est créé. L'amplitude de ce moment est suffisamment importante pour obliger l'appareil à tourner suivant l'axe du lacet.

On notera que, pendant le vol lent, il est important de disposer d'un mécanisme de gouverne de lacet extrêmement efficace pour compenser l'effet des rafales de vent et l'angle de dérapage de l'appareil dû à des vents latéraux.

La méthode de gouverne de roulis décrite précédemment peut être utilisée efficacement pendant un vol en palier à grande vitesse. Cela signifie que la même méthode de gouverne de roulis peut être utilisée pour toutes les phases de vol. A grandes vitesses, les variations antisymétriques du pas cyclique latéral créent des forces radiales qui agissent dans le plan de rotation des hélices. Ces forces sont la cause du moment de roulis.

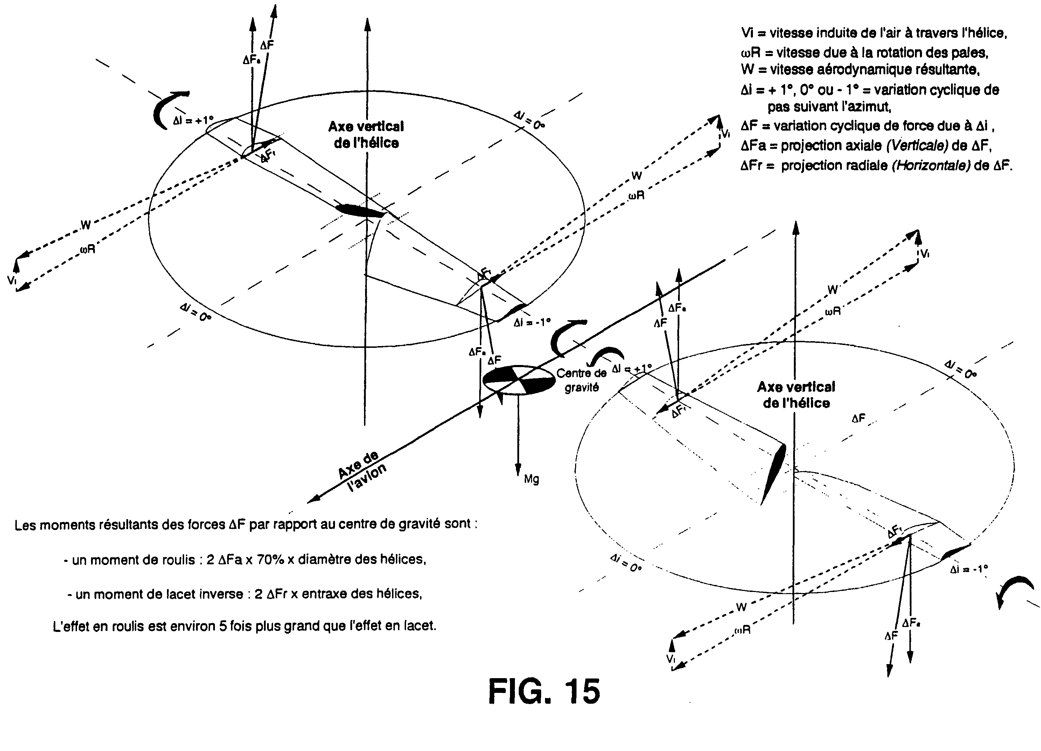

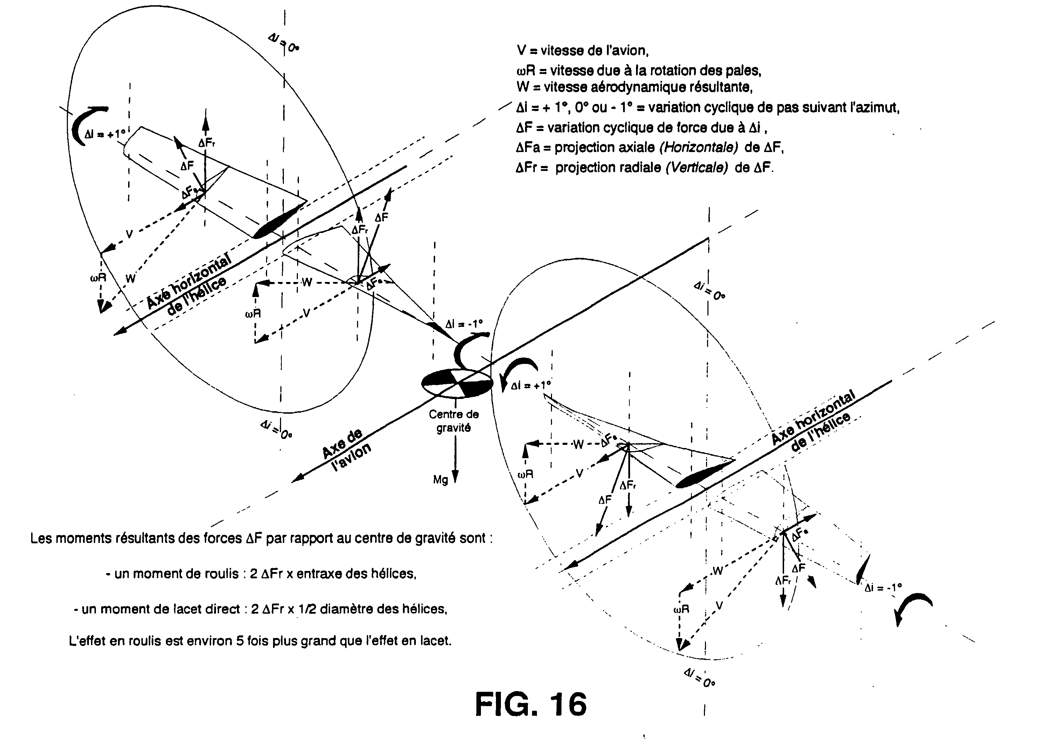

Le phénomène des forces de portance radiales dues aux hélices nécessite une explication. Une explication graphique est fournie sur les figures 15 et 16. La force de portance radiale est due à la valeur élevée de la vitesse axiale à travers l'hélice et, par conséquent, à l'augmentation importante du pas général. Par exemple, à une vitesse de croisière égale à la vitesse périphérique des pales des hélices, l'angle du pas général à l'extrémité de chaque pale est de 45 degrés. En outre, l'angle du pas général est même supérieur aux emplacements de la pale qui sont situés plus près de son pied. Lorsque la vitesse de croisière représente la moitié de la vitesse périphérique d'une pale, la moitié de la longueur de chaque pale d'hélice, de 0 à 0,5 R, a un angle de pas général supérieur à 45 degrés. Dans ces conditions, une variation du pas cyclique latéral entraîne des différences de portance entre les côtés droit et gauche du disque d'hélice. (Le disque d'hélice est le disque imaginaire créé par la rotation rapide des hélices). La composante de portance dans le plan des disques des hélices est supérieure à la composante de portance axiale. Les composantes dans le plan des disques des hélices s'ajoutent entre les côtés gauche et droit des disques des hélices, d'où une force de portance radiale importante. Si l'hélice droite tourne dans le sens des aiguilles d'une montre et l'hélice gauche en sens inverse, le moment dû à la portance radiale (Fig. 16) agit dans la même direction que le moment induit par les hélices lorsque l'avion est en vol immobile (Fig. 15). Par conséquent, cette technique qui consiste à utiliser les variations du pas cyclique latéral pour gouverner le roulis est efficace pendant toutes les phases de vol et peut être employée du décollage à l'atterrissage comme seule méthode de gouverne du roulis.

En ce qui concerne les variations antisymétriques du pas cyclique longitudinal, si le mécanisme de verrouillage n'était pas verrouillé, comme en vol lent où il ne l'est pas, une inclinaison antisymétrique des hélices entraînerait un moment de roulis supplémentaire mais pas de moment de lacet. Il pourrait par conséquent sembler nécessaire de développer un mécanisme de commande pour permettre une gouverne de lacet en vol en palier à grande vitesse. Toutefois, à titre de caractéristique de l'invention et dans le but de simplifier l'appareil, un tel mécanisme de commande n'est pas nécessaire et n'est donc pas prévu dans l'appareil de l'invention.

A la différence des vitesses lentes, le courant d'air qui circule autour de l'appareil à des vitesses élevées agit sur les empennages verticaux (dérives 25) fixés à chacune des extrémités de l'aile 19 pour conférer à l'appareil la stabilité de lacet requise. Un mécanisme de gouverne de lacet n'est donc pas nécessaire lorsque l'appareil est en vol en palier à grande vitesse. Comme c'est le cas dans d'autres avions conventionnels volant à grandes vitesses, seuls les mécanismes de gouverne de tangage et de roulis sont nécessaires et ce sont donc les deux seuls mécanismes de gouverne dont le pilote dispose pendant que cet appareil particulier est en vol en palier à grande vitesse. La gouverne de roulis est la seule nécessaire pour permettre à l'appareil de virer efficacement, de sorte que les hélices sont verrouillées au niveau de la position 0 degré et que les variations antisymétriques du pas cyclique longitudinal ne sont pas utilisées.

Lorsque l'appareil est en transition entre les modes de vol vertical et horizontal, les méthodes de commande décrites précédemment pour le vol à vitesse lente et à vitesse élevée restent efficaces et peuvent être utilisés. Les variations antisymétriques de la composante latérale du pas cyclique provoquent le roulis de l'appareil et induisent également un lacet négligeable. Cela signifie que lorsque l'avion s'incline à droite, il tourne également à droite, mais pas suffisamment pour que cela constitue un inconvénient. Les variations antisymétriques du pas cyclique longitudinal créent un lacet lorsque l'appareil vole à une vitesse modérée et que les hélices ne sont que légèrement inclinées. Mais, lorsque la vitesse horizontale de l'appareil augmente, un roulis relativement faible et négligeable est créé. Toutefois, la gouverne de lacet devient inutile lorsque l'appareil accélère pour passer en vitesse de croisière, du fait de la stabilité de lacet assurée par les dérives 25 de l'aile.

Il est important de noter que le bénéfice de la force de portance radiale générée par les hélices est directement lié à la seconde caractéristique de conception de l'invention, c'est-à-dire à la combinaison d'une hélice à pas cyclique variable et d'un moyeu rigide. La portance radiale est concomitante à un moment transversal à l'hélice en raison du pas général important des hélices (45 degrés). Un rotor d'hélicoptère est, de par sa conception à pales articulées, inapte à transmettre un moment transversal de ce type et s'oriente de lui-même pour compenser et, par conséquent, annuler ce moment et, avec lui, toute la portance radiale. Une hélice d'avion conventionnel dont le pas cyclique ne peut pas être modifié, ne peut pas être manoeuvrée par le pilote pour engendrer une portance radiale.

Par conséquent, l'invention décrite ici en relation avec un mode de réalisation préféré remplit individuellement et collectivement tous les buts définis précédemment et propose un aérodyne à décollage et atterrissage verticaux présentant une grande nouveauté et une grande utilité.

Bien que la description ci-dessus ait porté sur un mode de réalisation préféré de l'invention, celle-ci n'est bien entendu pas limitée aux modes de réalisation décrits et illustrés ici, et l'homme de l'art comprendra aisément qu'il est possible d'y apporter de nombreuses variantes et modifications sans pour autant sortir du cadre de l'invention.

**Revendications**

1. Aérodyne à décollage et atterrissage verticaux, comprenant un fuselage (11) comportant une extrémité avant (12) et une extrémité arrière (16) ; une aile (19) montée sur l'extrémité arrière (16) ; un empennage canard horizontal (40) monté sur l'extrémité avant (12) ; deux bras opposés (27,29) portés latéralement par le fuselage (11), entre l'aile (19) et l'empennage (40) ; chaque bras comportant une extrémité libre distante du fuselage (11), sur laquelle est montée une nacelle d'hélice (33,35) portant une hélice (37) possédant un axe de rotation et entraînée par des moyens moteurs (17) par l'intermédiaire d'arbres de transmission (45), les hélices (37) possédant chacune un moyeu d'hélice (55) et des pales (59) ; chaque pale d'une hélice étant reliée de manière tourillonnante au moyeu correspondant (55) pour que son pas puisse varier, chaque hélice possédant en outre des moyens pour faire varier le pas de ses pales de façon collective et de façon cyclique suivant l'azimut longitudinal et l'azimut latéral autour de l'axe de rotation de ladite hélice ; l'aérodyne comportant en outre des moyens de commande de tangage, de roulis et de lacet à la disposition du pilote, chaque nacelle d'hélice (33,35) étant montée sur l'extrémité libre du bras correspondant par un pivot d'inclinaison (93) et étant apte à s'incliner entre une première position dans laquelle l'axe de rotation de son hélice est sensiblement horizontal, et une seconde position dans laquelle cet axe est sensiblement vertical ;

**caractérisé en ce que** les nacelles (33,35) peuvent s'incliner d'elles-mêmes autour de leurs pivots d'inclinaison (93) sous l'action du moment appliqué résultant de variations du pas cyclique des pales (59) des hélices (37), leur inclinaison étant contrôlée par des moyens de freinage appropriés (95,106,111,113 et 114).

2. Aérodyne selon la revendication 1, **caractérisé en ce que** les moyens de freinage de l'inclinaison des nacelles (33,35) comprennent deux tiges (95) qui transmettent l'angle d'inclinaison desdites nacelles (33,35) par rapport à leurs bras (27,29) à un organe central destiné à limiter cet angle d'inclinaison entre 0 degré et 90 degrés ainsi que la vitesse de variation de cet angle.

3. Aérodyne selon la revendication 2, **caractérisé en ce que** l'organe central comporte une butée de fin de course (106) qui empêche l'angle d'inclinaison de dépasser la valeur de 90 degrés vers l'arrière.

4. Aérodyne selon la revendication 3, **caractérisé en ce qu'**il possède un centre de gravité situé en avant des bras (27,29), le moment à piquer du fuselage étant transmis aux nacelles d'hélice (33,35) par la butée (106), lorsque celle-ci est au contact.

5. Aérodyne selon la revendication 2, **caractérisé en ce que** l'organe central comprend un amortisseur destiné à limiter la vitesse de variation de l'angle d'inclinaison pendant les phases de transition du vol, sans entraîner une modification sensible du moment de tangage transmis à l'aérodyne.

6. Aérodyne selon la revendication 5, **caractérisé en ce que** l'amortisseur comprend une tige (101) reliée à l'organe central et portant un piston (103) mobile dans un cylindre (105), le cylindre comportant de part et d'autre du piston des orifices reliés entre eux par un conduit (107,109) comportant un gicleur calibré (111).

7. Aérodyne selon la revendication 6, **caractérisé en**

**ce que** le conduit (107,109) contient un robinet (113) constituant l'un des moyens de freinage appropriés pouvant être actionné entre une position ouverte permettant un écoulement de fluide freiné par le seul gicleur (111) et une position fermée empêchant l'écoulement de fluide, donc le déplacement du piston (103).

8. Aérodyne selon la revendication 1, **caractérisé en ce que** les pivots d'inclinaison (93) entre les nacelles d'hélice (33,35) et les bras (27,29) comportent chacun un organe de verrouillage (114) apte à être enclenché pour bloquer l'axe des hélices parallèlement à l'axe de l'aérodyne en vol rapide, et apte à être désenclenché pour permettre la libre inclinaison des nacelles (33,35) pendant les vols de transition.

9. Aérodyne selon la revendication 1, **caractérisé en ce que** l'empennage canard horizontal (40) comporte deux volets pivotants (43).

10. Aérodyne selon les revendications 5, 8 et 9, **caractérisé en ce que** le moyen de commande de tangage comprend un manche (121) relié aux moyens de variation cyclique longitudinale du pas des pales, quelle que soit l'inclinaison des nacelles, et commande, outre le tangage instantané à courte période de l'aérodyne, le mouvement lent d'inclinaison des nacelles vers l'avant/vers l'arrière en combinaison avec la position sortie/rentrée des volets (43) de l'empennage.

11. Aérodyne selon la revendication 2, **caractérisé en ce que** chaque tige (95) est une tige de torsion telle que chacune des nacelles d'hélice (33,35) peut accepter un écart d'environ ± 3° par rapport à l'angle d'inclinaison.

12. Aérodyne selon la revendication 11, **caractérisé en ce que** le moyen de commande de lacet est relié de façon antisymétrique aux moyens de variation cyclique longitudinale du pas des pales, l'action de ce moyen de commande provoquant un moment sur les nacelles d'hélice, une inclinaison différentielle jusqu'à ± 3° desdites nacelles du fait de la torsibilité des tiges (95), et un moment de lacet sur l'aérodyne proportionnel au sinus de l'angle d'inclinaison.

13. Aérodyne selon les revendications 10 et 11, **caractérisé en ce que** le moyen de commande de lacet comprend le manche (121) de la commande de tangage et un palonnier (131) dont les extrémités sont reliées aux moyens de variation cyclique longitudinale du pas des pales des hélices.

14. Aérodyne selon la revendication 1, **caractérisé en ce que** l'aile (19) est placée au-dessus du fuselage (11) de façon à être dégagée du souffle des hélices.

15. Aérodyne selon la revendication 1, **caractérisé en ce que** chaque pale (59) comporte une racine reliée de manière tourillonnante au moyeu (55) par un insert femelle (61) entourant une fusée mâle (57), un premier palier (65) situé au niveau de ladite racine et un second palier (63) espacé du premier.

16. Aérodyne selon la revendication 1, **caractérisé en ce que** la variation du pas cyclique de chaque hélice (37) suivant les deux azimuts est commandée par un plateau oscillant (79).

17. Aérodyne selon les revendications 10 ou 12, **caractérisé en ce que** la liaison entre les moyens de commande à la disposition du pilote et les moyens de variation cyclique du pas des pales comprend une transmission flexible insensible à l'inclinaison des nacelles d'hélice (33,35).

**Patentansprüche**

1. Senkrecht startendes und landendes Flugzeug, das einen Rumpf (11) mit einem vorderen Ende (12) und einem hinteren Ende (16), einen auf das hintere Ende (16) montierten Flügel (19) und ein an das vordere Ende (12) montiertes horizontales Kopfleitwerk (40) umfasst sowie zwei durch den Rumpf (11) seitlich getragene entgegengesetzte Arme (27, 29) zwischen dem Flügel (19) und dem Leitwerk (40), wobei jeder Arm ein vom Rumpf (11) entferntes freies Ende aufweist, an dem eine Propellergondel (33, 35) befestigt ist, die einen Propeller (37) trägt, der eine Rotationsachse besitzt und über Transmissionswellen (45) angetrieben wird durch Antriebseinrichtungen (17); jeder der Propeller (37) eine Propellemabe (55) und Blätter (59) umfasst; jedes Blatt eines Propellers drehbar mit der entsprechenden Nabe (55) verbunden ist, so dass seine Stellung variieren kann; jeder Propeller außerdem Einrichtungen umfasst, um die Stellung seiner Blätter kollektiv und zyklisch zu ändern, entsprechend dem Longitudinal-Azimut und dem Lateral-Azimut, um die Rotationsachse des genannten Propellers herum; das Flugzeug außerdem dem Piloten zur Verfügung stehende Nickbewegungs-, Rollbewegungs- und Gierbewegungs-Steuereinrichtungen umfasst, wobei jede Propellergondel (33, 35) an dem freien Ende des entsprechenden Arms mittels eines Neigungsgelenks (93) befestigt ist und fähig ist, sich zu neigen zwischen einer ersten Stellung, in der die Rotationsachse ihres Propellers im Wesentlichen horizontal ist, und einer zweiten Stellung, in der diese Achse im Wesentlichen vertikal ist;
**dadurch gekennzeichnet, dass** sich die Gondeln (33, 35) von selbst unter der Wirkung des aus den zyklischen Änderungen der Stellung der Blätter (59) des Propellers (37) resultierenden Moments um ihre Neigungsgelenke (93) neigen können, wobei ihre Neigung durch geeignete Bremseinrichtungen (95, 106, 111, 113 und 114) gesteuert wird.

2. Flugzeug nach Anspruch 1, **dadurch gekennzeichnet, dass** die Neigungsbremseinrichtungen der Gondeln (33, 35) zwei Stangen (95) umfassen, die den Neigungswinkel der Gondeln (33, 35) in Bezug auf ihre Arme (27, 29) zu einem Zentralorgan übertragen, das dazu bestimmt ist, diesen Winkel auf eine Neigung zwischen 0 und 90 Grad zu begrenzen sowie die Änderungsgeschwindigkeit dieses Winkels zu begrenzen.

3. Flugzeug nach Anspruch 2, **dadurch gekennzeichnet, dass** das Zentralorgan einen Endstellungs-Anschlag (106) umfasst, der verhindert, dass der Neigungswinkel den Wert von 90 Grad nach hinten überschreitet.

4. Flugzeug nach Anspruch 3, **dadurch gekennzeichnet, dass** es einen Schwerpunkt besitzt, der sich vor den Armen (27, 29) befindet, wobei das Kopflastigkeitsmoment des Rumpfes durch den Anschlag (106), wenn dieser sich im Kontakt befindet, auf die Propellergondeln (33, 35) übertragen wird.

5. Flugzeug nach Anspruch 2, **dadurch gekennzeichnet, dass** das Zentralorgan einen Dämpfer umfasst, der dazu dient, die Änderungsgeschwindigkeit des Neigungswinkels während der Übergangsphasen des Flugs zu begrenzen, ohne eine wesentliche Modifikation des auf das Flugzeug übertragenen Längs- bzw. Nickmoments zur Folge zu haben.

6. Flugzeug nach Anspruch 5, **dadurch gekennzeichnet, dass** der Dämpfer eine Stange (101) aufweist, die mit dem Zentralorgan verbunden ist und einen in einem Zylinder (105) beweglichen Kolben (103) umfasst, wobei der Zylinder beiderseits des Kolbens Öffnungen aufweist, die durch eine Leitung (107,109) miteinander verbunden sind, die eine kalibrierte Düse (111) umfasst.

7. Flugzeug nach Anspruch 6, **dadurch gekennzeichnet, dass** die Leitung (107,109) ein Leitungsventil (113) enthält, das eine der entsprechenden Bremseinrichtungen bildet und betätigt werden kann zwischen einer offenen Stellung, die ein nur durch die Düse (111) gebremstes Strömen des Fluids ermöglicht, und einer geschlossenen Stellung, die das Strömen des Fluids und folglich die Verschiebung des Kolbens (103) verhindert.

8. Flugzeug nach Anspruch 1, **dadurch gekennzeichnet, dass** jedes der Neigungsgelenke (93) zwischen den Propellergondeln (33, 35) und den Armen (27, 29) ein Verriegelungsorgan (114) umfasst, das verriegelt werden kann, um die Achse der Propeller parallel zu der Achse des Flugzeugs im Schnellflug zu blockieren, und entriegelt werden kann, um die freie Neigung der Gondeln (33, 35) während des Transitionsflugs bzw. Übergangsflugs zu ermöglichen.

9. Flugzeug nach Anspruch 1, **dadurch gekennzeichnet, dass** das horizontale Kopfleitwerk (40) zwei schwenkbare Klappen (43) umfasst.

10. Flugzeug nach den Ansprüchen 5, 8 und 9, **dadurch gekennzeichnet, dass** die Nickbewegungs-Steuereinrichtungen einen Steuerknüppel (121) umfassen, der verbunden ist mit den Einrichtungen zur zyklischen Longitudinaländerung der Stellung der Blätter, unabhängig von der Neigung der Gondeln, und außer der momentanen Nickbewegung des Flugzeugs von kurzer Dauer die langsame Vorwärts-/Rückwärts-Neigungsbewegung der Gondeln in Verbindung mit der ausgefahrenen/eingefahrenen Stellung der Klappen (43) des Kopfleitwerks steuert.

11. Flugzeug nach Anspruch 2, **dadurch gekennzeichnet, dass** jede Stange (95) eine Torsionsstange ist, so dass für jede der Propellergondeln (33, 35) eine Abweichung von ungefähr ± 3° in Bezug auf den Neigungswinkel akzeptabel ist.

12. Flugzeug nach Anspruch 11, **dadurch gekennzeichnet, dass** die Gierbewegungs-Steuereinrichtung antisymmetrisch mit den Einrichtungen zur zyklischen Longitudinaländerung der Stellung der Blätter verbunden ist, wobei die Betätigung dieser Steuereinrichtung ein Moment auf die Propellergondeln, eine bis zu ± 3° unterschiedliche Neigung der Gondeln aufgrund der Torsionsfähigkeit der Stangen (95) und ein auf das Flugzeug ausgeübtes, zum Sinus des Neigungswinkel proportionales Giermoment bewirkt.

13. Flugzeug nach den Ansprüchen 10 und 11, **dadurch gekennzeichnet, dass** die Gierbewegungs-Steuereinrichtung den Steuerknüppel (121) der Nickbewegungssteuerung und einen Ausgleicher (131) umfasst, dessen Enden mit den Einrichtungen zur zyklischen Longitudinaländerung der Stellung der Blätter des Propellers verbunden sind.

14. Flugzeug nach Anspruch 1, **dadurch gekennzeichnet, dass** der Flügel (19) über dem Rumpf (11) angeordnet ist, so dass er sich nicht in dem Propeller-Luftstrom befindet.

**15.** Flugzeug nach Anspruch 1, **dadurch gekennzeichnet, dass** jedes Blatt (59) einen Fuß umfasst, der mit der Nabe (55) drehbar verbunden ist, wobei ein Zapfen (57) in der Öffnung eines Einsatzteils (61) gelagert ist durch ein erstes Lager (65), das sich in Höhe des genannten Fußes befindet, und ein zweites Lager (63) mit Abstand von dem ersten Lager.

**16.** Flugzeug nach Anspruch 1, **dadurch gekennzeichnet, dass** die zyklische Änderung der Stellung jedes Propellers (37) gemäß den beiden Azimuten durch eine oszillierende Platte (79) gesteuert wird.

**17.** Flugzeug nach den Ansprüchen 10 oder 12, **dadurch gekennzeichnet, dass** die Verbindung zwischen den dem Piloten zur Verfügung stehenden Steuereinrichtungen und den Einrichtungen zur zyklischen Änderung der Stellung der Blätter eine flexible Transmission umfasst, die unempfindlich ist gegenüber der Neigung der Propellergondeln (33, 35).

**Claims**

**1.** A vertical takeoff and landing aircraft, comprising a fuselage (11) having a forward end (12) and a rearward end (16); a wing (19) mounted on the rearward end (16); a horizontal stabilizer (40) mounted on the forward end (12); a pair of opposed booms (27, 29) carried laterally by the fuselage (11), between the wing (19) and the horizontal stabilizer (40); each boom having a free end distal of the fuselage (11) on which is mounted a propeller nacelle (33, 35) carrying a propeller (37) having an axis of rotation and driven by engine means (17) through drive shafts (45), the propellers (37) each having a propeller hub (55) and blades (59); wherein each propeller blade is journaled in the corresponding hub (55) so that its pitch may vary, each propeller further having means for varying the pitch of the blades thereof collectively and cyclically along the longitudinal azimut and lateral azimut about its axis of rotation; the aircraft further comprising pitch, roll and yaw control means available to the pilot, each propeller nacelle (33, 35) being mounted on the free end of the corresponding boom by a tilt pivot (93) and being able to tilt between a first position, in which the axis of rotation of its propeller is substantially horizontal and a second position, in which said axis is substantially vertical; **characterized in that** the nacelles (33, 35) are tiltable by themselves about their tilt pivots (93) under the action of the applied moment resulting from changes in the cyclic pitch of the blades (59) of the propellers (37). The tilting being controlled by appropriate brake means (95, 106, 111, 113 and 114).

**2.** The aircraft according to claim 1, **characterized in that** the means for breaking the tilting of the nacelles (33, 35) comprises two rods (95) transmitting the tilt angle of said nacelles (33, 35) with respect to the booms (27, 29) thereof to a central device for limiting said tilt angle between 0 degrees and 90 degrees as well as the rate of variation of said angle.

**3.** The aircraft according to claim 2, **characterized in that** the central device comprises a stop (106), which prevents the tilt angle from exceeding the value of 90 degrees backward.

**4.** The aircraft according to claim 3, **characterized in that** it has a centre of gravity located forward of the booms (27, 29), the pitching down moment of the fuselage being transmitted to the propeller nacelles (33, 35) by the stop (106) when the latter is engaged.

**5.** The aircraft according to claim 2, **characterized in that** the central device comprises a damper for limiting the rate of variation of the tilt angle during the transitional phases of flight, without causing any substantial change in the pitching moment transmitted to the aircraft.

**6.** The aircraft according to claim 5, **characterized in that** the damper comprises a rod (101) connected to the central device and carrying a piston (103) movable in a cylinder (105), the cylinder having, on each side of the piston, openings interconnected by a conduit (107, 109) comprising a calibrated nozzle (111).

**7.** The aircraft according to claim 6, **characterized in that** the conduit (107, 109) contains a valve (113) forming one of the appropriate brake means which is actuatable between an open position permitting a fluid flow slowed down by the sole nozzle (111), and a closed position preventing the fluid flow and thereby the movement of the piston (103).

**8.** The aircraft according to claim 1, **characterized in that** the tilt pivots (93) between the propeller nacelles (33, 35) and the booms (27, 29) each comprise a locking device (114), which is engageable to lock the propeller axis parallel to the aircraft axis in high speed flight, and disengageable to allow for free tilting of the nacelles (33, 35) during transitional flights.

**9.** The aircraft according to claim 1, **characterized in that** the horizontal stabilizer (40) comprises two pivotable flaps (43).

**10.** The aircraft according to claims 5, 8 and 9, **characterized in that** the pitch control means comprises a stick (121) connected to the longitudinal cyclic blade pitch variation means, irrespective of the nacelle pitch, and controls, in addition to the short term instantaneous pitch of the aircraft, the slow forward/backward tilting motion of the nacelles in combination with the extended/retracted position of the stabilizer flaps (43).

**11.** The aircraft according to claim 2, **characterized in that** each rod (95) is a torsion rod such that each of the propeller nacelles (33, 35) may accept a difference of approximately $\pm\ 3°$ with respect to the tilt angle.

**12.** The aircraft according to claim 11, caracterized in that the yaw control means is connected anti-symmetrically to the longitudinal cyclic blade pitch variation means, the action of said yaw control means inducing a moment on the propeller nacelles, a differential tilting of up to $\pm\ 3°$ of said nacelles due to the torsional elasticity of the rods (95), and a yaw moment on the aircraft which is proportional to the sine of the tilt angle.

**13.** The aircraft according to claims 10 and 11, **characterized in that** the yaw control means comprises the pitch control stick (121) and rudder pedals (131), the ends of which are connected to the longitudinal cyclic pitch variation means of the propeller blades.

**14.** The aircraft according to claim 1 , **characterized in that** the wing (19) is placed above the fuselage (11) so as to be unaffected by the propeller wash.

**15.** The aircraft according to claim 1, **characterized in that** each blade (59) comprises a root, which is journaled on the hub (55) by a female insert (61) surrounding a male spindle (57), a first bearing (65) located at said root and a second bearing (63), which is spaced apart from the first bearing.

**16.** The aircraft according to claim 1, **characterized in that** the cyclic pitch variation of each blade (37) along the two azimuts is controlled by a swash plate (79).

**17.** The aircraft according to claim 10 or 12, **characterized in that** the connection between the control means available to the pilot and the cyclic blade pitch variation means comprises a flexible control drive, which is not susceptible to the tilt of the propeller nacelles (33, 35).

$$F_r$$

$$2V_i \; : 30 \; m/s$$

$$Mg$$

**Position du manche de pas cyclique**

Cabré       Piqué

**Position des manettes des gaz**

Limite OEI

Ralenti       Pleins gaz

## FIG. 1

$$V_h = 0 \text{ m/s}$$

$F_r$

$Mg$

**Position du manche
de pas cyclique**

**Position des
manettes des gaz**

*Limite
OEI*

*Cabré*  *Piqué*  *Ralenti*  *Pleins gaz*

# FIG. 2

$F_r$

$V_h = 25 \text{ m/s}$

$f_e$

$Mg$

**Position du manche
de pas cyclique**

**Position des
manettes des gaz**

Limite
130

Cabré          Piqué          Ralenti          Pleins gaz

## FIG. 3

$$V_h = 25 \text{ m/s}$$

$F_r$

$f_e$

$Mg$

**Position du manche
de pas cyclique**

**Position des
manettes des gaz**

*Cabré*　　　*Piqué*　　　*Ralenti*　　　*Pleins gaz*

# FIG. 4

$f_a$

$V_h = 50$ m/s

$F_r$

$f_e$

Mg

**Position du manche
de pas cyclique**

*Cabré*        *Piqué*

**Position des
manettes des gaz**

*Ralenti*        *Pleins gaz*

# FIG. 5

$f_a$

$V_h = 50\ m/s$

$f_e$

$F_r$

$Mg$

**Position du manche
de pas cyclique**

Cabré — Piqué

**Position des
manettes des gaz**

Limite
OEI

Ralenti — Pleins gaz

## FIG. 6

$f_a$  $V_h = 100$ m/s

$f_e$

Mg

**Position du manche
de pas cyclique**

Cabré          Piqué

**Position des
manettes des gaz**

Limite OEI

Ralenti          Pleins gaz

# FIG. 7

$f_a$

$V_h = 50$ m/s

$f_e$

$Mg$

**Position du manche de pas cyclique**

**Position des manettes des gaz**

Limite OEI

Cabré          Piqué          Ralenti          Pleins gaz

# FIG. 8

$f_a$

$V_h = 50 \text{ m/s}$

$F_r$

Mg

**Position du manche
de pas cyclique**

**Position des
manettes des gaz**

Limite OEI

Cabré          Piqué          Ralenti          Pleins gaz

## FIG. 9

$f_a$

$V_h = 50$ m/s

$F_r$

Mg

**Position du manche de pas cyclique**

Cabré    Piqué

**Position des manettes des gaz**

Limite OEI

Ralenti    Pleins gaz

# FIG. 10

FIG. 11

**FIG. 12**

FIG. 13

FIG. 14

Vi = vitesse induite de l'air à travers l'hélice,

ωR = vitesse due à la rotation des pales,

W = vitesse aérodynamique résultante,

Δi = + 1°, 0° ou - 1° = variation cyclique de pas suivant l'azimut,

ΔF = variation cyclique de force due à Δi ,

ΔFa = projection axiale *(Verticale)* de ΔF,

ΔFr = projection radiale *(Horizontale)* de ΔF.

**Axe vertical de l'hélice**

**Axe vertical de l'hélice**

Axe de l'avion

Centre de gravité

Les moments résultants des forces ΔF par rapport au centre de gravité sont :

- un moment de roulis : 2 ΔFa x 70% x diamètre des hélices,

- un moment de lacet inverse : 2 ΔFr x entraxe des hélices,

L'effet en roulis est environ 5 fois plus grand que l'effet en lacet.

**FIG. 15**

V = vitesse de l'avion,

ωR = vitesse due à la rotation des pales,

W = vitesse aérodynamique résultante,

Δi = + 1°, 0° ou - 1° = variation cyclique de pas suivant l'azimut,

ΔF = variation cyclique de force due à Δi ,

ΔFa = projection axiale (Horizontale) de ΔF,

ΔFr = projection radiale (Verticale) de ΔF.

Les moments résultants des forces ΔF par rapport au centre de gravité sont :

- un moment de roulis : 2 ΔFr x entraxe des hélices,

- un moment de lacet direct : 2 ΔFr x 1/2 diamètre des hélices,

L'effet en roulis est environ 5 fois plus grand que l'effet en lacet.

FIG. 16

FIG. 17

63  61  57  65  59  61  81  93  45  74  73  76  27

55  53

83  79  49  47  51  71  69

33

FIG. 18

EP 0 808 768 B1

34

EP 0 808 768 B1

**FIG. 19**

35

FIG. 20

EP 0 808 768 B1